# EUROPÄISCHE PATENTSCHRIFT

(11) **EP 4 384 426 B1**
(45) Veröffentlichungstag und Bekanntmachung des Hinweises auf die Patenterteilung: **29.10.2025**
(21) Anmeldenummer: 22760712.4
(22) Anmeldetag: 02.08.2022
(51) Int. Cl.: B60T 10/02

(54) **BREMSEINRICHTUNG FÜR EIN KRAFTFAHRZEUG**
BRAKE DEVICE FOR A VEHICLE
DISPOSITIF DE FREIN POUR VÉHICULE

(30) Priorität: 12.08.2021 DE 102021004153
(43) Veröffentlichungstag der Anmeldung: 19.06.2024
(73) Patentinhaber: Daimler Truck AG, 70771 Leinfelden-Echterdingen (DE)
(72) Erfinder: STEFFENS, Frank, 73760 Ostfildern (DE); STRÖLIN, Marc, 73765 Neuhausen (DE)
(74) Vertreter: JENSEN & SON
(86) Internationale Anmeldenummer: PCT/EP2022/071611
(87) Internationale Veröffentlichungsnummer: WO 2023/016849

(56) Entgegenhaltungen:
- DE-A1- 10 141 794
- DE-A1- 102006 030 792
- DE-A1- 102006 030 794
- DE-A1- 102018 009 707
- DE-A1- 19 951 731
- DE-A1- 19 951 735
- DE-T5- 112016 002 339

## Beschreibung

Die Erfindung betrifft eine Bremseinrichtung für ein Kraftfahrzeug gemäß dem Oberbegriff von Patentanspruch 1.

Die DE 101 41 794 A1 offenbart einen hydrodynamischen Retarder für ein Kraftfahrzeug mit einem Kreislauf zur Steuerung des Retarders, der eine Hydraulikpumpe, einen Wärmetauscher, ein Ventil und eine Steuer- und Regeleinheit enthält, wobei das Fördervolumen der Pumpe derart verstellbar ist, dass der Volumenstrom abhängig von der Fahrzeuggeschwindigkeit beziehungsweise Gelenkwellendrehzahl oder Retarderdrehzahl einstellbar ist.

Darüber hinaus zeigt die DE 11 2016 002339 T5 eine hydrodynamische Retardervorrichtung mit einem Rotor, einem Stator und einem mit einem Flüssigkeitskreislauf verbundenen Ausdehnungsgefäß. Um dem Arbeitsraum Flüssigkeit zuzuführen, ist ein weiteres Ausdehnungsgefäß vorgesehen.

Aufgabe der vorliegenden Erfindung ist es, eine Bremseinrichtung für ein Kraftfahrzeug zu schaffen, sodass die Bremseinrichtung besonders vorteilhaft gekühlt werden kann.

Diese Aufgabe wird erfindungsgemäß durch eine Bremseinrichtung für ein Kraftfahrzeug mit den Merkmalen des Patentanspruchs 1 gelöst. Vorteilhafte Ausgestaltungen mit zweckmäßigen Weiterbildungen der Erfindung sind in den übrigen Ansprüchen angegeben.

Die Erfindung betrifft eine Bremseinrichtung für ein Kraftfahrzeug, welches vorzugsweise als Nutzfahrzeug, insbesondere als schweres Nutzfahrzeug, ausgebildet ist. Das Kraftfahrzeug kann als Kraftwagen, insbesondere als Personenkraftwagen, Nutzkraftwagen oder Lastkraftwagen, oder als Personenbus ausgebildet sein. Bei dem Kraftfahrzeug kann es sich beispielweise um ein batterieelektrisches Fahrzeug oder um ein Brennstoffzellenfahrzeug oder um ein Hybridfahrzeug handeln. Beispielweise kann das Kraftfahrzeug eine Verbrennungskraftmaschine aufweisen, mittels welcher das Kraftfahrzeug zumindest teilweise antreibbar ist. Vorzugsweise ist die Bremseinrichtung dazu vorgesehen, das Kraftfahrzeug zu verzögern. Dadurch kann eine Geschwindigkeit, mit welcher das Kraftfahrzeug auf einer Fahrbahn fährt, mittels der Bremseinrichtung vermindert werden. Dabei kann das Kraftfahrzeug mittels der Bremseinrichtung beispielweise bis zu seinem Stillstand verzögert werden.

Die Bremseinrichtung umfasst einen von einem Fluid durchströmbaren und wenigstens zwei von dem Fluid durchströmbare Leitungsstrecken aufweisenden Fluidpfad, welcher insbesondere als Hydrauliksystem bezeichnet werden kann. In dem Fluidpfad ist wenigstens ein insbesondere als Ölpumpe bezeichnetes Pumpenelement zum Hindurchfördern des Fluids durch den Fluidpfad angeordnet. Vorzugsweise ist das Pumpenelement als elektrische Pumpe ausgebildet.

In dem Fluidpfad ist wenigstens ein von dem Fluid durchströmbarer Kühler angeordnet, mittels welchem Wärme von dem Fluid abführbar ist. Mit anderen Worten ausgedrückt umfasst der Fluidpfad den Kühler, welcher von dem den Fluidpfad durchströmenden Fluid durchströmbar ist, wobei infolge des Durchströmens Wärme des den Kühler durchströmenden Fluids mittels des Kühlers von dem Fluid abführbar ist, wodurch das Fluid mittels des Kühlers gekühlt werden kann. Dadurch kann eine Temperatur des Fluids besonders gering gehalten werden.

In dem Fluidpfad ist wenigstens eine von dem Fluid durchströmbare, wenigstens einen Ventileingang und wenigstens einen von dem Ventileingang beabstandeten Ventilausgang aufweisende und zwischen wenigstens zwei Ventilstellungen bewegbare Ventileinrichtung angeordnet. Die Ventileinrichtung ist mittels einer ersten der Leitungsstrecken fluidisch mit dem Pumpenelement verbunden beziehungsweise verbindbar. Mit anderen Worten ausgedrückt ist die erste Leitungsstrecke dazu vorgesehen, einen von dem Fluid durchströmbaren Pumpenausgang des Pumpenelements fluidisch mit dem Ventileingang der Ventileinrichtung zu verbinden. Der Ventileingang und der Ventilausgang sind von dem Fluid durchströmbar.

Die Bremseinrichtung weist einen mit dem Fluidpfad fluidisch verbunden beziehungsweise verbindbaren Hydrauliksumpf auf, welcher insbesondere als Ölsumpf bezeichnet werden kann. Der Hydrauliksumpf weist wenigstens einen Aufnahmeraum auf, in welchem das Fluid aufnehmbar ist beziehungsweise aufgenommen ist, wobei der Aufnahmeraum fluidisch mit dem Fluidpfad verbindbar beziehungsweise verbunden ist, wodurch das in dem Hydrauliksumpf aufgenommene Fluid zumindest teilweise aus dem Hydrauliksumpf abführbar und in den Fluidpfad einleitbar ist und/oder das den Fluidpfad durchströmende Fluid zumindest teilweise aus dem Fluidpfad abführbar und in den Hydrauliksumpf einleitbar ist. Mittels des Hydrauliksumpfs kann das Fluid besonders vorteilhaft gespeichert werden, wobei der Fluidpfad beispielsweise über den Hydrauliksumpf besonders vorteilhaft mit dem Fluid versorgt werden kann.

Die Bremseinrichtung umfasst wenigstens einen Retarder, welcher einen Stator, einen separat von dem Stator ausgebildeten und um eine Drehachse relativ zu einem Gehäuseelement des Retarders verdrehbaren Rotor und einen Retardereingang aufweist. Über den Retardereingang kann das Fluid dem Retarder zugeführt werden. Über den Retardereingang ist der Retarder mittels der zweiten der Leitungsstrecken fluidisch über den Ventilausgang mit der Ventileinrichtung verbunden beziehungsweise verbindbar. Mit anderen Worten ausgedrückt ist die zweite Leitungsstrecke dazu vorgesehen, den Ventilausgang der Ventilvorrichtung fluidisch mit dem Retardereingang zu verbinden. Dadurch, dass die Bremseinrichtung den Retarder aufweist, kann die Bremseinrichtung insbesondere als Retardersystem bezeichnet werden.

In einer ersten der Ventilstellungen der Ventileinrichtung ist der Ventileingang mit dem Ventilausgang fluidisch verbunden, wodurch das die erste Leitungsstrecke durchströmende Fluid über den Ventileingang durch die Ventileinrichtung hindurch, über den Ventilausgang und die zweite Leitungsstrecke dem Retardereingang zuführbar ist. In der zweiten Ventilstellung der Ventileinrichtung ist der Ventileingang nicht fluidisch mit dem Ventilausgang verbunden, wodurch das die erste Leitungsstrecke durchströmende Fluid nicht durch die Ventileinrichtung hindurch strömen kann und somit nicht über die zweite Leitungsstrecke dem Retardereingang zugeführt werden kann. In der ersten Ventilstellung durchströmt das Fluid die erste Leitungsstrecke in einer ersten Strömungsrichtung der ersten Leitungsstrecke.

Beispielsweise weist die Ventileinrichtung einen von dem Fluid durchströmbaren Durchgangskanal auf, welcher fluidisch mit dem Ventileingang und dem Ventilausgang verbindbar ist. Beispielsweise ist in der ersten Ventilstellung der Durchgangskanal freigegeben, wodurch das die erste Leitungsstrecke durchströmende Fluid über den Ventileingang, über den Durchgangskanal, über den Ventilausgang und über das die zweite Leitungsstrecke dem Retardereingang zuführbar ist. Beispielsweise ist der Durchgangskanal in der zweiten Ventilstellung versperrt, wodurch der Ventileingang und der Ventilausgang nicht miteinander verbunden sind. Dadurch kann das die erste Leitungsstrecke durchströmende Fluid in der zweiten Ventilstellung nicht über den Ventileingang, den Durchgangskanal, den Ventilausgang und über die Leitungsstrecke dem Retardereingang zugeführt werden. Die Ventileinrichtung kann insbesondere als Ventilblock bezeichnet werden. Vorzugsweise ist die Ventileinrichtung als Wegeventil ausgebildet.

Um die Bremseinrichtung besonders vorteilhaft kühlen zu können, ist es erfindungsgemäß vorgesehen, dass der Fluidpfad eine von dem Fluid durchströmbare und separat von der ersten und der zweiten Leitungsstrecke ausgebildete, dritte Leitungsstrecke aufweist, über welche der Retarderausgang und der Kühler unter Umgehung der Ventileinrichtung fluidisch verbunden sind. Mit anderen Worten ausgedrückt ist der Kühler in der dritten Leitungsstrecke angeordnet und ein von dem Fluid durchströmbarer Kühlereingang des Kühlers ist über die dritte Leitungsstrecke unter Umgehung der Ventileinrichtung, insbesondere dem Ventileingang und dem Ventilausgang, und unter Umgehung des Hydrauliksumpfs und unter Umgehung des Retardereingangs fluidisch über den Retarderausgang mit dem Retarder verbunden. Wieder mit anderen Worten ausgedrückt ist das den Retarderausgang aus dem Retarder abgeführte und die dritte Leitungsstrecke in einer ersten Strömungsrichtung der dritten Leitungsstrecke durchströmende Fluid über den Kühlereingang in den Kühler einleitbar, wodurch der Kühler von dem Fluid in einer ersten Strömungsrichtung des Kühlers durchströmbar ist.

Zudem weist der Fluidpfad eine in der dritten Leitungsstrecke angeordnete Verzweigungsstelle auf, über welche der Kühler, insbesondere der Kühlereingang, unter Umgehung des Retarders, der Ventileinrichtung und des Pumpenelements fluidisch mit dem Hydrauliksumpf verbunden ist, wobei der Kühler, insbesondere ein von dem Fluid durchströmbarer und von dem Kühlereingang beabstandeter Kühlerausgang des Kühlers, über die Ventileinrichtung unter Umgehung des Retarders und des Hydrauliksumpfs fluidisch mit der ersten Leitungsstrecke verbunden oder verbindbar ist. Mit anderen Worten ausgedrückt kann das Fluid aus dem Hydrauliksumpf entnommen werden und über die Verzweigungsstelle die dritte Leitungsstrecke in der ersten Strömungsrichtung der dritten Leitungsstrecke durchströmend dem Kühler, insbesondere dem Kühlereingang, zugeführt werden oder das Fluid entgegengesetzt von dem Kühler, insbesondere dem Kühlereingang, in einer der ersten Strömungsrichtung der dritten Leitungsstrecke entgegengesetzt, zweiten Strömungsrichtung der dritten Leitungsstrecke über die dritte Leitungsstrecke und die Verzweigungsstelle in den Hydrauliksumpf eingeleitet werden.

Dabei ist es vorgesehen, dass das Fluid von dem Kühler, insbesondere dem Kühlerausgang, unter Umgehung des Retarders und des Hydrauliksumpfs zu der Ventileinrichtung geführt werden kann, wodurch der Kühler über die Ventileinrichtung fluidisch mit der ersten Leitungsstrecke, insbesondere mit der ersten und der zweiten Leitungsstrecke, verbunden oder verbindbar ist.

Beispielsweise weist die Ventileinrichtung einen von dem Fluid durchströmbaren und von dem Ventileingang und dem Ventilausgang beabstandeten Ventilzugang auf, welcher fluidisch mit der dritten Leitungsstrecke verbunden beziehungsweise verbindbar ist. Vorzugsweise ist der Ventilzugang in der ersten Ventilstellung, insbesondere über den Durchgangskanal, mit dem Ventileingang und dem Ventilausgang fluidisch verbunden und in der zweiten Ventilstellung ist der Ventilzugang nicht fluidisch, insbesondere nicht über den Durchgangskanal, mit dem Ventileingang und dem Ventilausgang verbunden.

Vorzugsweise ist der Kühler über den Ventilzugang der Ventileinrichtung unter Umgehung des Retarders und des Hydrauliksumpfs fluidisch mit der ersten Leitungsstrecke, insbesondere mit der ersten und der zweiten Leitungsstrecke, verbunden oder verbindbar. Dadurch kann das den Kühler in der ersten Strömungsrichtung des Kühlers durchströmende Fluid in der ersten Ventilstellung über den Ventilzugang durch die Ventileinrichtung hindurch, über den Ventilausgang in die zweite Leitungsstrecke eingeleitet werden und dadurch über den Retardereingang dem Retarder, insbesondere erneut, zugeführt werden. Dadurch kann ein Rezirkulationskreislauf des gekühlten Fluids realisiert werden.

Vorzugsweise ist der Kühler als Wärmetauscher ausgebildet. Der Wärmetauscher kann beispielsweise als Rotationswärmetauscher ausgebildet sein, welcher insbesondere als Rotatory Heat Exchanger (RHE) bezeichnet werden kann. Mit anderen Worten ausgedrückt weist der Wärmetauscher vorzugsweise einen RHE-Rahmen auf.

Vorzugsweise ist es vorgesehen, dass das Fluid als Getriebeöl des Getriebes verwendbar ist beziehungsweise verwendet wird. Darunter kann insbesondere verstanden werden, dass der Hydrauliksumpf als gemeinsamer Hydrauliksumpf für die Bremseinrichtung und für das Getriebe ausgebildet ist, das heißt die Bremseinrichtung und das Getriebe nutzen einen gemeinsamen Fluidhaushalt beziehungsweise Ölhaushalt.

Um einen Bauraum und Kosten der Bremseinrichtung besonders gering halten zu können, weist die Bremseinrichtung in einer weiteren Ausführungsform wenigstens ein Kupplungselement auf, über welches der Rotor des Retarders mit einer Antriebswelle des Kraftfahrzeugs koppelbar und von der Antriebswelle entkoppelbar ist, und eine Koppeleinrichtung auf. Die Antriebswelle ist um eine Wellendrehachse der Antriebswelle relativ zu dem Gehäuseelement verdrehbar. Die Antriebswelle kann beispielsweise von einer elektrischen Maschine des Kraftfahrzeugs und/oder von der Verbrennungskraftmaschine angetrieben werden, wodurch über die Antriebswelle Räder des Kraftfahrzeugs angetrieben werden können. Unter dem Koppeln des Rotors mit der Antriebswelle ist zu verstehen, dass der Rotor drehmomentübertragend beziehungsweise drehfest mit der Antriebswelle koppelbar ist, wodurch beispielsweise ein von der Antriebswelle bereitgestelltes Drehmoment auf den Rotor übertragen werden kann. Mittels der Koppeleinrichtung sind der Rotor und die Antriebswelle durch das Bewegen der Ventileinrichtung in die erste Ventilstellung über das Kupplungselement koppelbar und durch das Bewegen der Ventileinrichtung in die zweite Ventilstellung entkoppelbar. Mit anderen Worten ausgedrückt sind das Kupplungselement und die Ventileinrichtung über die Koppeleinrichtung derart gekoppelt, dass der Rotor und die Antriebswelle in der ersten Ventilstellung über das Kupplungselement miteinander gekoppelt sind und in der zweiten Ventilstellung voneinander entkoppelt sind. Wieder mit anderen Worten ausgedrückt weist die Ventilvorrichtung zumindest ein verstellbares Verbindungsmittel auf, wobei das Kupplungselement über die Koppeleinrichtung derart mit dem Verbindungsmittel gekoppelt ist, dass die erste Ventilstellung ein offenes Kupplungselement bewirkt und die zweite Ventilstellung ein geschlossenes Kupplungselement bewirkt.

Das Kupplungselement ist bezogen auf einen von der Antriebswelle zu dem Rotor verlaufenden Drehmomentenfluss, über welchen das Drehmoment von der Antriebswelle auf den Rotor übertragbar ist, zwischen der Antriebswelle und dem Rotor angeordnet, sodass der Drehmomentenfluss, insbesondere dann, wenn das Kupplungselement geschlossen ist, über das Kupplungselement verläuft. Der Drehmomentenfluss kann alternativ entgegengesetzt von dem Rotor zu der Antriebswelle über das Kupplungselement verlaufen. Das Kupplungselement weist beispielsweise ein erstes Kupplungsteil und ein zweites Kupplungsteil auf. Das erste Kupplungsteil kann drehfest mit der Antriebswelle verbunden sein und das zweite Kupplungsteil kann drehfest mit dem Rotor verbunden sein.

Das Kupplungselement kann geöffnet und geschlossen werden, was bedeutet, dass das Kupplungselement zwischen einem geöffneten Zustand und einem geschlossenen Zustand umgeschaltet werden kann. In dem geöffneten Zustand ist die Antriebswelle von dem Rotor entkoppelt. In dem geschlossenen Zustand ist die Antriebswelle mit dem Rotor gekoppelt. In dem geöffneten Zustand sind die beiden Kupplungsteile des Kupplungselements beziehungsweise die Antriebswelle und der Rotor voneinander entkoppelt, sodass beispielsweise kein Drehmoment oder höchstens ein insbesondere gegenüber Null größeres, erstes Drehmoment zwischen den beiden Kupplungsteilen beziehungsweise zwischen der Antriebswelle und dem Rotor übertragen werden kann. In dem geschlossenen Zustand sind die beiden Kupplungsteile, insbesondere reibschlüssig und/oder formschlüssig und/oder kraftschlüssig, derart drehmomentübertragend miteinander verbunden, dass zwischen den Kupplungsteilen beziehungsweise zwischen der Antriebswelle und dem Rotor ein gegenüber dem ersten Drehmoment größeres, zweites Drehmoment übertragen werden kann.

Unter einer drehfesten Verbindung wird eine Verbindung zweier separat voneinander ausgebildeter Komponenten verstanden, die derart miteinander verbunden sind, dass zumindest Relativdrehungen zwischen den Komponenten sowie vorzugsweise in axialer Richtung und in radialer Richtung der Komponenten Relativbewegungen zwischen den Komponenten unterbleiben beziehungsweise vermieden sind.

Das Kupplungselement kann insbesondere als Kupplung oder als Trennkupplung bezeichnet werden. Das Kupplungselement kann als eine formschlüssige Kupplung, insbesondere als Klauenkupplung, ausgebildet sein. Ferner kann das Kupplungselement als reibschlüssige Kupplung, insbesondere als Reib- oder Lamellenkupplung, ausgebildet sein. Die Antriebswelle kann beispielsweise eine Getriebewelle eines Getriebes des Kraftfahrzeugs sein oder mit der Getriebewelle drehmomentübertragend verbunden beziehungsweise verbindbar sein.

Sind die Antriebswelle und der Rotor über das geschlossene Kupplungselement miteinander gekoppelt, so kann der Rotor von der Antriebswelle angetrieben werden und dadurch um seine Drehachse relativ zu dem Gehäuseelement verdreht werden. Das über den Retardereingang dem Retarder zugeführte Fluid kann mittels des Rotors beschleunigt werden, wodurch der Rotor verzögert werden kann. Beispielsweise kann das Fluid infolge der Beschleunigung im beziehungsweise zu dem Stator geleitet werden und von dem Stator zurück zu dem Rotor geleitet werden, wodurch der Rotor abgebremst werden kann. Mit anderen Worten ausgedrückt beaufschlagt der Rotor das Fluid, wobei der Rotor infolge der Beaufschlagung abgebremst wird. Unter dem Abbremsen kann insbesondere verstanden werden, dass eine Drehgeschwindigkeit des Rotors geringer ist als wenn das Beaufschlagen des Fluids von dem Rotor unterbleibt. Das Abbremsen des Rotors kann insbesondere als Verzögern bezeichnet werden. Infolge des Verzögerns des Rotors wird dadurch, dass das Kupplungselement geschlossen ist, die Antriebswelle von dem Retarder, insbesondere dem Rotor, verzögert beziehungsweise abgebremst. Dadurch kann das Kraftfahrzeug mittels der Bremseinrichtung, insbesondere mittels des Retarders, verzögert werden. Dadurch, dass der Rotor von dem Fluid abgebremst werden kann, kann das Fluid insbesondere als Bremsfluid bezeichnet werden. Der Retarder kann insbesondere als Ölretarder bezeichnet werden.

Bei einem als batterieelektrisches oder als Brennstoffzellenfahrzeug ausgebildeten Kraftfahrzeug ist die Bremseinrichtung vorzugsweise als Zusatzbremse vorgesehen. Darunter kann insbesondere verstanden werden, dass das Kraftfahrzeug wenigstens eine separat von der Bremseinrichtung ausgebildete, insbesondere mechanische, Bremse aufweist, mittels welcher das Kraftfahrzeug verzögert werden kann. Beispielsweise kann beim Bremsen beziehungsweise Verzögern des Kraftfahrzeugs eine Bremsleistung teilweise von der Bremseinrichtung und teilweise von der Bremse bereitgestellt werden. Alternativ oder zusätzlich kann die Bremseinrichtung als Dauerbremse in dem Kraftfahrzeug vorgesehen sein. Dadurch, dass die Bremseinrichtung den Retarder aufweist, kann die Bremseinrichtung insbesondere als Hydrobrake bezeichnet werden.

Eine herkömmliche Bremseinrichtung, insbesondere Zusatzbremse oder Dauerbremse, kann insbesondere als elektromotorische Bremse ausgebildet sein, welche insbesondere als elektrische Generatorbremse bezeichnet werden kann. Dabei ist ein Überlastungsschutz für die elektrische Maschine des Kraftfahrzeugs und für einen Energiespeicher, insbesondere eine Batterie, des Kraftfahrzeugs bei vollständig geladenem Energiespeicher vorzusehen. Zudem ist eine Dauerbremsleistung der herkömmlichen Bremseinrichtung von einer maximalen generatorischen Motorleistung der elektromotorischen Bremse, insbesondere inklusive einer Inverterleistung eines Wechselrichters, begrenzt. Dabei können Nebenverbraucher, beispielsweise ein Lüfter, eine maximale Bremsleistung, insbesondere Dauerbremsleistung, der herkömmlichen Bremseinrichtung üblicherweise nicht erhöhen. Die herkömmliche Bremseinrichtung kann besonders aufwendig sein und dabei beispielsweise einen besonders hohen Bauraum benötigen sowie besonders hohe Kosten aufweisen.

Dadurch, dass die Bremseinrichtung den Retarder aufweist, können die Nachteile der elektromotorischen Bremse vermieden werden. Dadurch, dass die Bremseinrichtung die Koppeleinrichtung aufweist, kann ein separat von der Koppeleinrichtung beziehungsweise von der Ventileinrichtung ausgebildetes Verstellelement zum Öffnen beziehungsweise zum Schließen des Kupplungselements entfallen. Somit kann das Zuführen des Fluids zu dem Retarder und die Kupplungsbetätigung beziehungsweise eine jeweilige Kupplungsstellung mittels der genau einen Ventileinrichtung realisiert werden. Zudem kann eine Verschiebungseinrichtung zur, insbesondere axialen, Rotorverschiebung des Rotors entfallen. Dadurch können Kosten und Bauraum der Bremseinrichtung beziehungsweise einer Retarderbaugruppe des Retarders besonders gering gehalten werden. Zudem kann ein besonders hoher Grad an Systemintegration erzielt werden. Darüber hinaus kann die Bremseinrichtung beziehungsweise der Retarder mit besonders wenig Aufwand dargestellt beziehungsweise hergestellt werden, da beispielsweise das Verstellelement beziehungsweise die Rotorverschiebung entfallen kann.

Die Bremseinrichtung ist vorzugsweise besonders dafür geeignet, in einem batterieelektrischen Fahrzeug oder in einem Brennstoffzellenfahrzeug oder in einem konventionellen Fahrzeug, welches beispielsweise die Verbrennungskraftmaschine umfasst, eingesetzt zu werden. Darüber hinaus umfasst die Bremseinrichtung vorzugsweise separat und einfach tauschbare Komponenten beziehungsweise Baugruppen, beispielsweise das Pumpenelement, die Ventileinrichtung oder das Hydrauliksystem. Dadurch können beispielsweise Wartungskosten und/oder Reparaturkosten der Bremseinrichtung beziehungsweise des Kraftfahrzeugs besonders gering gehalten werden. Zudem kann eine Abdichtung zwischen der Antriebswelle und dem Retarder, insbesondere dem Rotor entfallen. Ferner kann eine Entleervorrichtung entfallen.

In weiterer Ausgestaltung der Erfindung weist die Ventileinrichtung einen zwischen wenigstens zwei Positionen bewegbaren Ventilschieber auf, welcher in der ersten Ventilstellung in einer ersten der Position angeordnet ist und in der zweiten Ventilstellung in der zweiten Position angeordnet ist. Mit anderen Worten ausgedrückt weist die Ventileinrichtung beziehungsweise das Verbindungsmittel den insbesondere als Schieber bezeichneten Ventilschieber auf, welcher zwischen den wenigstens zwei Positionen translatorisch relativ zu dem Gehäuseelement verschiebbar ist, wobei sich der Ventilschieber in der ersten Ventilstellung der Ventileinrichtung in der ersten Position befindet und in der zweiten Ventilstellung der Ventileinrichtung in der zweiten Position befindet. Der Ventilschieber kann beispielsweise als Schaltkolben beziehungsweise als Steuerkolben ausgebildet sein. Die Koppeleinrichtung ist als mechanisch mit dem Ventilschieber gekoppelter Aktuator ausgebildet, welcher zwischen wenigstens zwei Aktuatorpositionen bewegbar ist, wobei der Aktuator durch Bewegen des Ventilschiebers in die erste Position in eine erste der Aktuatorpositionen bewegbar ist, wodurch der Rotor und die Antriebswelle über das Kupplungselement gekoppelt sind, und durch das Bewegen des Ventilschiebers in die zweite Position in die zweite Aktuatorposition bewegbar ist, wodurch der Rotor und die Antriebswelle voneinander entkoppelt sind. Mit anderen Worten ausgedrückt ist der Aktuator derart mechanisch mit dem Ventilschieber gekoppelt, sodass der Aktuator infolge des Bewegens des Ventilschiebers in die erste Position in die erste Aktuatorposition bewegbar ist beziehungsweise bewegt wird und der Aktuator infolge des Bewegens des Ventilschiebers in die zweite Position in die zweite Aktuatorposition bewegbar ist beziehungsweise bewegt wird. Der Aktuator ist derart mechanisch mit dem Kupplungselement gekoppelt, sodass der Rotor und die Antriebswelle in der ersten Aktuatorposition über das Kupplungselement miteinander gekoppelt sind und in der zweiten Aktuatorposition voneinander entkoppelt sind. Dadurch kann das Kupplungselement durch die Bewegung der Ventileinrichtung zwischen den Ventilstellungen beziehungsweise in die Ventilstellungen besonders vorteilhaft über die Koppeleinrichtung betätigt werden. Der Aktuator ist vorzugsweise als Schaltgabel, beispielsweise als Gestänge, ausgebildet.

Die Kühlung des Fluids kann sowohl beim Bremsen erfolgen, indem das Fluid aus dem Retarderausgang über die dritte Leitungsstrecke durch den Kühler geführt wird, als auch bei abgeschaltetem Retarder beziehungsweise abgekoppeltem Rotor erfolgen, indem das Fluid aus dem Hydrauliksumpf entnommen wird, in die dritte Leitungsstrecke eingeleitete wird und durch den Kühler geführt wird.

In einer weiteren Ausführungsform ist es vorgesehen, dass die erste Leitungsstrecke eine Entnahmestelle aufweist, über welche das Pumpenelement fluidisch mit einem Steueranschluss der Ventileinrichtung verbunden ist beziehungsweise verbindbar ist, wodurch der Steueranschluss mittels des Pumpenelements von dem Fluid beaufschlagbar ist, wodurch die Ventileinrichtung von der zweiten Ventilstellung in die erste Ventilstellung bewegbar ist. Mit anderen Worten ausgedrückt ist der Pumpenausgang über die Entnahmestelle unmittelbar oder unter Umgehung des Kühlers und unter Umgehung des Retarders mit dem Steueranschluss der Ventileinrichtung fluidisch verbunden. Wieder mit anderen Worten ausgedrückt ist zumindest ein Teil des mittels des Pumpenelements durch die erste Leitungsstrecke hindurch geförderten Fluids an der Entnahmestelle aus der ersten Leitungsstrecke entnehmbar und dem Steueranschluss zuführbar, wodurch die Ventileinrichtung, insbesondere der Ventilschieber, über den Steueranschluss von dem Fluid beaufschlagbar ist, wobei infolge der Beaufschlagung die Ventileinrichtung von der zweiten Ventilstellung in die erste Ventilstellung bewegbar ist beziehungsweise der Ventilschieber von der zweiten Position in die erste Position bewegbar ist. Dadurch kann mittels des Pumpenelements durch das Einstellen eines Fluiddrucks des Fluids die Ventileinrichtung betätigt werden und dadurch das Kupplungselement betätigt werden. Dadurch kann das Betätigen beziehungsweise das Schließen der Kupplungseinrichtung mittels der, insbesondere elektrischen, Ölpumpe durchgeführt werden, wodurch keine zusätzlich zu der Ölpumpe vorgesehene Ansteuerung für das Kupplungselement benötigt wird. Somit ist die Ventileinrichtung vorzugsweise ein hydraulisches Schaltventil. Mit anderen Worten ausgedrückt ist eine hydraulische Umschaltung der Ventileinrichtung mit einer Kupplungsbetätigung gekoppelt.

In einer weiteren Ausführungsform umfasst der Fluidpfad eine separat von den Leitungsstrecken ausgebildete und von dem Fluid durchströmbare vierte Leitungsstrecke, über welche das Pumpenelement und die Ventileinrichtung unter Umgehung der ersten Leitungsstrecke, des Retarders, des Ventileingangs, des Ventilausgangs und des Kühlers fluidisch verbunden sind. Mit anderen Worten ausgedrückt weist das Pumpenelement einen von dem Fluid durchströmbaren, von dem Pumpenausgang beabstandeten, insbesondere separat von dem Pumpenausgang ausgebildeten, Pumpeingang auf, welcher über die vierte Leitungsstrecke unter Umgehung des Pumpenausgangs, der ersten Leitungsstrecke, des Retarders, des Ventileingangs und des Ventilausgangs und des Kühlers mit der Ventileinrichtung fluidisch verbunden beziehungsweise verbindbar ist. Über einen Pumpeneingang kann das die vierte Leitungsstrecke durchströmende Fluid dem Pumpenelement zugeführt werden und somit in das Pumpenelement eingeleitete werden. Dabei durchströmt das Fluid die vierte Leitungsstrecke in einer ersten Strömungsrichtung der vierten Leitungsstrecke.

Vorzugsweise ist es vorgesehen, dass die Ventileinrichtung wenigstens einen von dem Fluid durchströmbaren, von dem Ventileingang beabstandeten und fluidisch mit der vierten Leitungsstrecke verbundenen beziehungsweise verbindbaren, zweiten Ventileingang und wenigstens einen von dem Fluid durchströmbaren, von dem Ventilausgang beabstandeten und fluidisch mit dem Hydrauliksumpf verbundenen beziehungsweise verbindbaren, zweiten Ventilausgang aufweist, wobei in der zweiten Ventilstellung das die vierte Leitungsstrecke in einer der ersten Strömungsrichtung der vierten Leitungsstrecke entgegensetzen, zweiten Strömungsrichtung der vierten Leitungsstrecke durchströmende Fluid über den zweiten Ventileingang, durch die Ventileinrichtung hindurch, über den zweiten Ventilausgang in den Hydrauliksumpf einleitbar ist. Mit anderen Worten ausgedrückt ist das Pumpenelement über die vierte Leitungsstrecke unter Umgehung der ersten Leitungsstrecke, des Retarders, des Ventileingangs, des Ventilausgangs und des Kühlers fluidisch mit dem zweiten Ventileingang verbunden, welcher separat von dem Ventileingang und dem Ventilausgang ausgebildet ist, wobei die Ventileinrichtung den separat von dem Ventileingang, dem Ventilausgang und dem zweiten Ventileingang ausgebildeten, zweiten Ventilausgang umfasst, welcher unter Umgehung des Retarders mit dem Hydrauliksumpf fluidisch verbunden ist. In der zweiten Ventilstellung der zweite Ventileingang mit dem zweiten Ventilausgang fluidisch verbunden. Dadurch kann das die vierte Leitungsstrecke durchströmende Fluid in der zweiten Ventilstellung über die Ventileinrichtung, insbesondere den zweiten Ventileingang und den zweiten Ventilausgang, in den Hydrauliksumpf eingeleitet werden. In der ersten Ventilstellung ist der zweite Ventileingang nicht fluidisch mit dem zweiten Ventilausgang verbunden, wodurch das die vierte Leitungsstrecke durchströmende Fluid in der ersten Ventilstellung nicht über die Ventileinrichtung, insbesondere nicht den zweiten Ventileingang und den zweiten Ventilausgang, in den Hydrauliksumpf eingeleitet werden kann.

Vorzugsweise ist der Ventilzugang als der zweite Ventilausgang ausgebildet. Darunter kann insbesondere verstanden werden, dass der Ventilzugang der zweite Ventilausgang ist.

Beispielsweise weist die Ventileinrichtung einen separat von dem Durchgangskanal ausgebildeten, von dem Durchgangskanal beabstandeten und von dem Fluid durchströmbaren zweiten Durchgangskanal auf, welcher mit dem zweiten Ventileingang und dem zweiten Ventilausgang fluidisch verbindbar ist. Der zweite Durchgangskanal ist nicht, insbesondere nicht unmittelbar, mit dem Durchgangskanal verbunden. In der zweiten Ventilstellung ist der zweite Durchgangskanal zumindest teilweise freigegeben, wodurch das Fluid den zweiten Durchgangskanal durchströmen kann und somit von dem zweiten Ventileingang zu dem zweiten Ventilausgang geführt werden kann. In der ersten Ventilstellung ist der zweite Durchgangskanal versperrt, wodurch der zweite Ventileingang und der zweite Ventilausgang nicht fluidisch miteinander verbunden sind, sodass das Führen des Fluids von dem zweiten Ventileingang zu dem zweiten Ventilausgang unterbleibt.

In weiterer Ausgestaltung ist es vorgesehen, dass der zweite Ventilausgang unter Umgehung des Retarders und des Pumpenelements fluidisch mit dem Kühler, insbesondere dem Kühlerausgang, verbunden ist. Mit anderen Worten ausgedrückt ist das die vierte Leitungsstrecke durchströmende Fluid in der zweiten Ventilstellung über den zweiten Ventileingang, die Ventileinrichtung und den zweiten Ventilausgang über die dritte Leitungsstrecke unter Umgehung des Retarders und unter Umgehung des Pumpenelements dem Kühler zuführbar, wobei das Fluid die dritte Leitungsstrecke dabei in einer der ersten Strömungsrichtung der dritten Leitungsstrecke entgegengesetzten, zweiten Strömungsrichtung der dritten Leitungsstrecke durchströmt. Vorzugsweise wird dabei das Fluid dem Kühler über den Kühlerausgang zugeführt, wodurch das Fluid den Kühler in einer der ersten Strömungsrichtung des Kühlers entgegengesetzt, zweiten Strömungsrichtung des Kühlers durchströmt, und über den Kühlereingang aus dem Kühler abgeführt und in die dritte Leitungsstrecke eingeleitet. Dadurch kann das Fluid, insbesondere das Getriebeöl, mittels des Pumpenelements über die vierte Leitungsstrecke und die Ventileinrichtung, insbesondere den zweiten Ventileingang und den zweiten Ventilausgang, dem Kühler über den Kühlerausgang zugeführt werden, sodass das Fluid, insbesondere das Getriebeöl, mittels des Kühlers gekühlt werden kann, wodurch die Temperatur des Fluids, insbesondere des Getriebeöls, besonders gering gehalten werden kann. Anschließend kann das gekühlte Fluid über den Kühlereingang aus dem Kühler abgeführt werden und über die dritte Leitungsstrecke in den Hydrauliksumpf eingeleitet werden. Dadurch kann das mittels des Kühlers gekühlte Fluid in den Hydrauliksumpf eingeleitet, insbesondere rückgeführt werden. Dabei kann das Kühlen des Fluids und somit das Kühlen der Bremseinrichtung oder des insbesondere als Getriebesystem bezeichneten Getriebes oder eines insbesondere als Achssystem bezeichneten, Achse des Kraftfahrzeugs, insbesondere Antriebsachse, insbesondere bei einem Nichtbremsbetrieb erfolgen. Bei der Antriebsachse handelt es sich vorzugsweise um eine elektrische Antriebsachse. Somit kann durch das Kühlen des Fluids beziehungsweise des Getriebesystems und/oder des Achssystems in dem Nichtbremsbetrieb eine besonders vorteilhafte Zusatzfunktion des Bremssystems realisiert werden. Unter dem Nichtbremsbetrieb kann insbesondere verstanden werden, dass das Kraftfahrzeug nicht mittels der Bremseinrichtung verzögert wird.

Das Kühlen des Fluids beziehungsweise des Getriebes und/oder des Achssystems in dem Nichtbremsbetrieb kann, insbesondere infolge der Anordnung beziehungsweise Ausgestaltung der Ventileinrichtung, des Kühlers und des Pumpenelements, durch Drehrichtungsumkehr des Pumpenelements, bezogen auf eine Drehrichtung des Pumpenelements in dem Bremsbetrieb, besonders einfach realisiert werden. Dadurch kann beispielweise eine Teilezahl der Bremseinrichtung besonders gering gehalten werden. Somit kann ein besonders hohes Maß an Systemintegration erzielt werden. Ferner können Kosten und Bauraum der Bremseinrichtung besonders gering gehalten werden.

In einer weiteren Ausführungsform ist es vorgesehen, dass die Bremseinrichtung eine in der vierten Leitungsstrecke angeordnete, erste Verbindungsstelle aufweist, über welche das die vierte Leitungsstrecke durchströmende Fluid unter Umgehung des Retarders, der Ventileinrichtung und des Kühlers mit dem Hydrauliksumpf fluidisch verbunden beziehungsweise verbindbar ist. Mit anderen Worten ausgedrückt weist die vierte Leitungsstrecke die erste Verbindungsstelle auf, über welche der Hydrauliksumpf mit dem Pumpeneingang fluidisch verbunden beziehungsweise verbindbar ist. Dadurch kann das Fluid mittels des Pumpenelements angesaugt und somit aus dem Hydrauliksumpf entnommen werden und über die vierte Leitungsstrecke über den Pumpeneingang in einer ersten Strömungsrichtung des Pumpenelements durch das Pumpenelement hindurchgeführt werden. Anschließend kann das Fluid über den Pumpenausgang aus dem Pumpenelement abgeführt werden und über die erste Leitungsstrecke, die Ventileinrichtung, insbesondere den Ventileingang und den Ventilausgang, und die zweite Leitungsstrecke dem Retarder über den Retardereingang zugeführt werden. Dadurch kann der Rotor mittels des dem Retarder zugeführten Fluids abgebremst werden.

In einer weiteren Ausführungsform ist es vorgesehen, dass die Ventileinrichtung wenigstens einen von dem Steueranschluss beabstandeten und fluidisch mit der vierten Leitungsstrecke verbundenen, zweiten Steueranschluss aufweist, welcher mittels des Pumpenelements über die vierte Leitungsstrecke von dem Fluid beaufschlagbar ist, wodurch die Ventileinrichtung von der ersten Ventilstellung in die zweite Ventilstellung bewegbar ist. Mit anderen Worten ausgedrückt weist die vierte Leitungsstrecke eine separat von der ersten Verbindungsstelle ausgebildete, zweite Verbindungsstelle auf, mittels welcher der Pumpeneingang des Pumpenelements unter Umgehung der Ventilvorrichtung und unter Umgehung des Retarders und unter Umgehung des Kühlers mit dem zweiten Steueranschluss der Ventilvorrichtung verbunden beziehungsweise verbindbar ist. Wieder mit anderen Worten ausgedrückt kann über die zweite Verbindungsstelle zumindest ein Teil des die vierte Leitungsstrecke in der zweiten Strömungsrichtung der vierten Leitungsstrecke durchströmenden Fluids aus der vierten Leitungsstrecke entnommen werden und dem zweiten Steueranschluss zugeführt werden, wodurch dieser mittels des Fluids beaufschlagt wird, wobei infolge der Beaufschlagung die Ventileinrichtung von der ersten Ventilstellung in die zweite Ventilstellung bewegbar ist beziehungsweise bewegt wird. Dadurch kann mittels des Pumpenelements an dem zweiten Steueranschluss ein Fluiddruck des Fluids bereitgestellt werden, infolgedessen die Ventileinrichtung von der ersten Ventilstellung in die zweite Ventilstellung bewegbar ist. Somit kann die Betätigung des Kupplungselements mittels des Pumpenelements durchgeführt werden, wodurch keine zusätzlich zu dem Pumpenelement vorgesehene Ansteuerung für die Betätigung des Kupplungselements erforderlich ist. Mit anderen Worten ausgedrückt ist eine hydraulische Umschaltung der Ventileinrichtung mit einer Kupplungsbetätigung gekoppelt.

In einer weiteren Ausführungsform weist die erste Leitungsstrecke eine dritte Verbindungsstelle auf, welche in Strömungsrichtung des von dem Pumpenelement zu dem Ventileingang strömenden Fluids zwischen dem Pumpenelement und der Entnahmestelle angeordnet ist. Über die dritte Verbindungsstelle ist die erste Leitungsstrecke unter Umgehung der Ventileinrichtung und des Pumpenelement fluidisch mit dem Hydrauliksumpf verbunden ist. Dadurch kann das Fluid das mittels des Pumpenelements angesaugt und dadurch aus dem Hydrauliksumpf entnommen werden und über die dritte Verbindungsstelle in die erste Leitungsstrecke eingeleitet werden, wobei das Fluid die erste Leitungsstrecke in einer der ersten Strömungsrichtung der ersten Leitungsstrecke entgegengesetzt, zweite Strömungsrichtung der ersten Leitungsstrecke durchströmt und über den Pumpenausgang in einer der ersten Strömungsrichtung des Pumpenelements entgegengesetzten, zweiten Strömungsrichtung des Pumpenelements durch das Pumpenelement hindurch in die vierte Leitungsstrecke eingeleitet werden kann. Anschließend kann das Fluid über die zweite Verbindungsstelle dem zweiten Steueranschluss zugeführt werden und/oder über den zweiten Ventileingang und den zweiten Ventilausgang über die dritte Leitungsstrecke dem Kühler zugeführt werden.

In einer weiteren Ausführungsform weist der Retarder einen von dem Retarderausgang beabstandeten, zweiten Retarderausgang auf und die Ventileinrichtung weist einen fluidisch mit dem zweiten Retarderausgang verbundenen und von dem Ventileingang und dem zweiten Ventileingang beabstandeten dritten Ventileingang und einen von dem Ventilausgang und dem zweiten Ventilausgang beabstandeten und mit dem Hydrauliksumpf, insbesondere unmittelbar, fluidisch verbundenen, dritten Ventilausgang auf. Mit anderen Worten ausgedrückt sind der separat von dem Retarderausgang ausgebildete, zweite Retarderausgang des Retarders, der separat von dem Ventileingang und dem zweiten Ventileingang ausgebildete, dritte Ventileingang der Ventileinrichtung und der separat von dem Ventilausgang und dem zweiten Ventilausgang ausgebildete, dritte Ventilausgang der Ventileinrichtung vorgesehen, wobei das aus dem Retarder über den zweiten Retarderausgang abgeführte Fluid unter Umgehung des Pumpenelements und des Wärmetauschers dem dritten Ventileingang zuführbar ist und das Fluid von dem dritten Ventilausgang unter Umgehung des Retarders, des Pumpenelements und des Kühlers dem Hydrauliksumpf zuführbar ist. In der zweiten Ventilstellung sind der dritte Ventileingang und der dritte Ventilausgang fluidisch miteinander verbunden, wodurch das über den zweiten Retarderausgang aus dem Retarder abgeführte Fluid über den dritten Ventileingang, durch die Ventileinrichtung hindurch, über den dritten Ventilausgang unter Umgehung des Pumpenelements und des Kühlers in den Hydrauliksumpf einleitbar ist. Wieder mit anderen Worten ausgedrückt sind in der zweiten Ventilstellung der dritte Ventilausgang und der dritte Ventileingang fluidisch miteinander verbunden, wodurch das über den zweiten Retarderausgang aus dem Retarder abgeführte Fluid unter Umgehung des Retardereingangs, des Retarderausgangs, des Ventileingangs, des zweiten Ventileingangs, des Ventilausgangs, des zweiten Ventilausgangs in den Hydrauliksumpf eingeleitet werden kann. In der ersten Ventilstellung ist der dritte Ventileingang nicht mit dem dritten Ventilausgang fluidisch verbunden, wodurch das Einleiten des aus dem Retarder über den zweiten Retarderausgang abgeführten Fluids über die Ventileinrichtung, insbesondere den dritten Ventileingang und den dritten Ventilausgang, beziehungsweise durch die Ventileinrichtung hindurch unterbleibt.

Beispielsweise weist die Ventileinrichtung einen von dem Fluid durchströmbaren und separat von dem Durchgangskanal und dem zweiten Durchgangskanal ausgebildeten, dritten Durchgangskanal auf, welcher mit dem dritten Ventileingang und mit dem dritten Ventilausgang fluidisch verbindbar ist. In der zweiten Ventilstellung ist der dritte Durchgangskanal zumindest teilweise freigegeben, wodurch das Fluid über den dritten Ventileingang durch den dritten Durchgangskanal hindurch zu dem dritten Ventilausgang geführt werden kann und in den Hydrauliksumpf eingeleitet werden kann. In der ersten Ventilstellung ist der dritte Durchgangskanal vollständig versperrt, wodurch das Zuführen des Fluids von dem dritten Ventileingang zu dem dritten Ventilausgang durch den dritten Durchgangskanal unterbleibt. Dadurch kann in der zweiten Ventilstellung beispielsweise das Fluid aus dem Retarder über den zweiten Retarderausgang abfließen und in den Hydrauliksumpf eingeleitet werden, wodurch ein Druckabbau eines Drucks des Fluids in dem Retarder erzielt werden kann. Dies kann beispielsweise für eine Synchronisierung von Drehzahlen des Rotors und der Antriebswelle erforderlich beziehungsweise sinnvoll sein.

Vorzugsweise ist eine elektronische Recheneinrichtung vorgesehen, mittels welcher die Bremseinrichtung über das Pumpenelement aktiviert und/oder geregelt beziehungsweise gesteuert und/oder überwacht wird.

In weiterer Ausgestaltung weist die Verzweigungsstelle ein Wechselventil auf beziehungsweise die Verzweigungsstelle ist als das Wechselventil ausgebildet. Vorzugsweise ist das Wechselventil als Wechselventil mit Anlegefeder, ausgebildet. Das Wechselventil ist vorzugsweise dazu ausgebildet, eine Strömung des Fluids in einer Strömungsrichtung von dem Retarderausgang durch das Wechselventil hindurch zu dem Kühler zuzulassen und eine Strömung des Fluids in einer entgegengesetzten Strömungsrichtung von dem Kühler und/oder dem Hydrauliksumpf durch das Wechselventil hindurch zu dem Retarderausgang zu unterbinden. Das Wechselventil ist vorzugsweise dazu ausgebildet, eine Strömung des Fluids von dem Retarderausgang durch das Wechselventil hindurch zu dem Hydrauliksumpf zu unterbinden. Das Wechselventil ist vorzugsweise dazu ausgebildet, eine Strömung von dem Kühler zu dem ersten Hydrauliksumpf durch das Wechselventil hindurch zuzulassen und/oder eine entgegengesetzte Strömung von dem Hydrauliksumpf durch das Wechselventil hindurch zuzulassen.

In weiterer Ausgestaltung ist in der vierten Leitungsstrecke, insbesondere zwischen dem Hydrauliksumpf und der ersten Verbindungsstelle, ein von dem Fluid durchströmbares, erstes Rückschlagventil angeordnet. Vorzugsweise ist das erste Rückschlagventil dazu ausgebildet, eine Strömung des Fluids von dem Hydrauliksumpf zu der ersten Verbindungsstelle zuzulassen und eine entgegengesetzte Strömung des Fluids von der ersten Verbindungsstelle zu dem Hydrauliksumpf zu unterbinden.

In weiterer Ausgestaltung ein von dem Fluid durchströmbares, zweites Rückschlagventil vorgesehen, welches dazu ausgebildet ist, eine Strömung des Fluids aus dem Hydrauliksumpf über die dritte Verbindungsstelle in die erste Leitungsstrecke zuzulassen und eine entgegengesetzte Strömung des Fluids von der ersten Leitungsstrecke über die dritte Verbindungsstelle zu dem Hydrauliksumpf zu unterbinden.

In weiterer Ausgestaltung ist in der vierten Leitungsstrecke zwischen dem Pumpenelement, insbesondere der zweiten Verbindungsstelle, und der Ventileinrichtung, insbesondere dem zweiten Ventileingang, ein von dem Fluid durchströmbares, drittes Rückschlagventil angeordnet. Vorzugsweise ist das dritte Rückschlagventil dazu ausgebildet, eine Strömung des Fluids von dem Pumpenelement, insbesondere der zweiten Verbindungsstelle, durch das dritte Rückschlagventil hindurch zu der Ventileinrichtung, insbesondere dem zweiten Ventileingang, zuzulassen und eine entgegengesetzte Strömung des Fluids von der Ventileinrichtung, insbesondere dem zweiten Ventileingang, zu dem Pumpenelement, insbesondere der zweiten Verbindungsstelle, zu unterbinden.

In weiterer Ausgestaltung ist in der zweiten Leitungsstrecke ein von dem Fluid durchströmbares, viertes Rückschlagventil zwischen dem Retardereingang und dem Ventilausgang angeordnet. Vorzugsweise ist das vierte Rückschlagventil dazu ausgebildet, eine Strömung des Fluids von dem Ventilausgang durch das vierte Rückschlagventil hindurch zu dem Retardereingang zuzulassen und eine Strömung des Fluids von dem Retardereingang zu dem Ventilausgang zu unterbinden.

In weiterer Ausgestaltung ist in der dritten Leitungsstrecke ein von dem Fluid durchströmbares, fünftes Rückschlagventil zwischen dem Retarderausgang und dem Kühler, insbesondere der Verzweigungsstelle, angeordnet. Vorzugsweise ist das fünfte Rückschlagventil dazu ausgebildet, eine Strömung von dem Retarderausgang durch das fünfte Rückschlagventil hindurch zu dem Kühler, insbesondere der Verzweigungsstelle, zuzulassen und eine entgegengesetzte Strömung des Fluids von dem Kühler, insbesondere der Verzweigungsstelle, zu dem Retarderausgang zu unterbinden.

In weiterer Ausgestaltung ist in der dritten Leitungsstrecke zwischen dem Hydrauliksumpf und der Verzweigungsstelle ein von dem Fluid durchströmbares, sechstes Rückschlagventil angeordnet. Vorzugsweise ist das sechste Rückschlagventil dazu ausgebildet, eine Strömung des Fluids von dem Hydrauliksumpf durch das sechste Rückschlagventil hindurch zu der Verzweigungsstelle zuzulassen und eine entgegengesetzte Strömung des Fluids von der Verzweigungsstelle zu dem Hydrauliksumpf zu unterbinden.

Beispielsweise kann wenigstens eines der Rückschlagventile ein Federelement aufweisen, insbesondere eine Anlegefeder. Dadurch kann beispielsweise das Zulassen der jeweiligen Strömung des Fluids ab einem bestimmten Fluiddruck des Fluids erfolgen, wobei der hierfür erforderliche minimale Fluiddruck von dem Federelement, insbesondere einer Steifigkeit des Federelements, abhängt.

Bei einem insbesondere als Synchronisation bezeichneten Betriebszustand der Bremseinrichtung befindet sich die Ventileinrichtung zu Beginn in der zweiten Ventilstellung. Mittels des Pumpenelements wird das Fluid durch die erste Leitungsstrecke hindurch gefördert, wodurch ein Druckaufbau des Fluids in der ersten Leitungsstrecke erzielt werden kann. Dadurch kann in der ersten Leitungsstrecke ein insbesondere als Niederdruck bezeichneter Druck eingestellt werden, wobei der Druck beispielweise zwischen 3 und 5 bar sein kann. Der Steueranschluss von dem Fluid beziehungsweise dem Druck des Fluids beaufschlagt, wodurch insbesondere dadurch, dass der Druck des Fluids bei dem Steueranschluss größer ist als bei dem zweiten Steueranschluss, die Ventileinrichtung von der zweiten Ventilstellung in Richtung der ersten Ventilstellung bewegt wird. Dadurch kann der Ventilschieber von der zweiten Position in Richtung der ersten Position bewegt und der Aktuator kann von der zweiten Aktuatorposition in Richtung der ersten Aktuatorposition bewegt werden. Dadurch kann mittels des Kupplungselements beziehungsweise mittels einer Synchroneinrichtung eine Synchronisierung, insbesondere eine Sperrsynchronisation, der Drehzahlen des Rotors und der Antriebswelle erfolgen. Wenn sich die Ventileinrichtung infolge der weiteren Beaufschlagung des Steueranschlusses mit dem Fluid beziehungsweise dem Druck in die erste Ventilstellung bewegt hat, so sind die Drehzahlen des Rotors und der Antriebswelle synchron. Dies kann insbesondere als Durchschaltung bei Gleichlauf bezeichnet werden. Dann befindet sich der Ventilschieber in der ersten Position und der Aktuator in der ersten Aktuatorposition.

Neben aktiver Steuerung beziehungsweise Regelung der Bremseinrichtung, insbesondere des Retarders, durch das Pumpenelement wird eine Aktivierung der Synchronisation ebenfalls durch das gleiche Pumpenelement durchgeführt. Damit wird keine gesonderte Ansteuerung für die Synchroneinrichtung benötigt.

Nach der Synchronisation kann die Bremseinrichtung in einen insbesondere als Bereitschaftsmodus bezeichneten Betriebsmodus oder in einen insbesondere als Bremsmodus bezeichneten Betriebsmodus übergehen. Bei dem Bremsmodus erfolgt mittels des Pumpenelements ein Druckaufbau beziehungsweise eine Druckmodulation des Fluids in der ersten Leitungsstrecke, wobei der Druckaufbau beispielsweise größer sein kann als der Druckaufbau bei der Synchronisation. Dadurch kann in der ersten Leitungsstrecke ein insbesondere als Hochdruck bezeichneter Druck des Fluids eingestellt werden, wobei der Druck beispielweise zwischen 5 und 15 bar sein kann. Dadurch, dass sich die Ventileinrichtung in der ersten Ventilstellung befindet, kann das Fluid mittels des Pumpenelements über die erste Leitungsstrecke durch die Ventileinrichtung hindurch, insbesondere über den Ventileingang und den Ventilausgang, über den Retardereingang in den Retarder eingeleitet werden, wodurch ein Druck des Fluids in dem Retarder besonders erhöht werden kann. Dadurch kann mittels der Bremseinrichtung, insbesondere des Retarders, ein Bremsmoment zum Abbremsen der Antriebswelle aufgebaut werden. Dieses Bremsmoment kann beispielsweise bei einer Überschreitung eines Temperaturschwellenwerts einer Temperatur des Fluids begrenzt werden. Hierfür kann in dem Fluidpfad, vorzugsweise in der dritten Leitungsstrecke, ein Temperatursensor zur Erfassung der Temperatur des Fluids vorgesehen sein. Wenn die mittels des Temperatursensors erfasste Temperatur höher ist als der Temperaturschwellenwert, kann die Bremsmomentenbegrenzung erfolgen.

Bei dem Bereitschaftsmodus ist beziehungsweise wird der Druck des Fluids in der ersten Leitungsstrecke mittels des Pumpenelements gegenüber dem Bremsmodus reduziert. Somit findet, bezogen auf den Bremsmodus, ein Druckabbau des Drucks des Fluids statt. Dabei ist es vorzugsweise vorgesehen, dass mittels des Pumpenelements in der vierten Leitungsstrecke ein Druckaufbau des Fluids unterbleibt, wodurch der zweite Steueranschluss vorzugsweise nicht von dem Fluid beaufschlagt wird. Die Synchronisation der Drehzahlen des Rotors und der Antriebswelle bleibt weiterhin aktiv. Die Ventileinrichtung verbleibt in der ersten Ventilstellung, der Ventilschieber verbleibt in der ersten Position und der Aktuator verbleibt in der ersten Aktuatorposition.

Ein weiterer Betriebsmodus kann insbesondere als Abschaltung bezeichnet werden. Die Abschaltung kann beispielsweise auf den Bereitschaftsmodus folgen. Bei der Abschaltung wird mittels des Pumpenelements das Fluid in die vierte Leitungsstrecke gefördert, wodurch in der vierten Leitungsstrecke ein Druckaufbau des Fluids realisiert werden kann. Dabei kann in der vierten Leitungsstrecke der Hochdruck, insbesondere 5 bis 15 bar, oder der Niederdruck, insbesondere 3 bis 5 bar, eingestellt werden. Dadurch wird der zweite Steueranschluss von dem Fluid beziehungsweise dem Druck des Fluids beaufschlagt. Insbesondere dadurch, dass in der vierten Leitungsstrecke der Druckaufbau stattfindet, ist der Druck des Fluids in dem zweiten Steueranschluss größer als in dem ersten Steueranschluss. Dadurch wird die Ventileinrichtung von der ersten Ventilstellung in Richtung der zweiten Ventilstellung bewegt. Dabei kann die Ventileinrichtung von der ersten Ventilstellung in die zweite Ventilstellung bewegt werden oder die Ventileinrichtung kann von der ersten Ventilstellung in eine Zwischenstellung bewegt werden, welche sich zwischen der ersten und der zweiten Ventilstellung befindet. Vorzugsweise befindet sich das Pumpenelement in der ersten Leitungsstrecke in einem Saugbetrieb, das heißt das die erste Leitungsstrecke durchströmende Fluid wird von dem Pumpenelement angesaugt, durch das Pumpenelement hindurch gefördert und somit in die vierte Leitungsstrecke eingeleitet. Dadurch kann der Druck des Fluids in der ersten Leitungsstrecke gegenüber dem Bremsbetrieb besonders reduziert werden und in der vierten Leitungsstrecke besonders erhöht werden, wodurch eine Druckdifferenz zwischen dem Druck des Fluids bei dem zweiten Steueranschluss und dem Steueranschluss besonders erhöht werden kann. Dadurch, dass die Ventileinrichtung in die zweite Ventilstellung bewegt wird, wird das Kupplungselement geöffnet, wodurch die Synchronisation der Drehzahlen des Rotors und der Antriebswelle deaktiviert wird.

Ein weiterer Betriebsmodus kann insbesondere als Kühlmodus bezeichnet werden. Dabei wird mittels des Pumpenelements das Fluid, insbesondere das Getriebeöl, aus dem Hydrauliksumpf angesaugt und über die dritte Verbindungsstelle in die erste Leitungsstrecke eingeleitet. In der ersten Leitungsstrecke liegt vorzugsweise ein insbesondere als Saugdruck bezeichneter Druck des Fluids vor, wobei der Saugdruck vorzugsweise kleiner als 1 bar ist. Das Fluid durchströmt die erste Leitungsstrecke in der zweiten Strömungsrichtung der ersten Leitungsstrecke und wird über den Pumpenausgang in das Pumpenelement eingeleitete. Das Fluid wird durch das Pumpenelement in der zweiten Strömungsrichtung des Pumpenelements hindurchgeführt und über den Pumpenausgang aus dem Pumpenelement abgeführt und in die vierte Leitungsstrecke eingeleitet. Das Fluid durchströmt die vierte Leitungsstrecke in der zweiten Strömungsrichtung der vierten Leitungsstrecke und wird durch die sich in der zweiten Ventilstellung befindende Ventileinrichtung über den zweiten Ventileingang und den zweiten Ventilausgang und über die dritte Leitungsstrecke dem Kühler über den Kühlerausgang zugeführt. Das Fluid durchströmt den Kühler in der zweiten Strömungsrichtung des Kühlers und wird über den Kühlereingang aus dem Kühler abgeführt und über die dritte Leitungsstrecke unter Umgehung des Retarders in den Hydrauliksumpf eingeleitet. Somit wird das gekühlte Fluid in den Hydrauliksumpf rückgeführt. Dadurch kann die Temperatur des Fluids, insbesondere des Getriebeöls, in der Bremseinrichtung, insbesondere in dem Hydrauliksumpf, beziehungsweise dem Getriebe besonders gering gehalten werden.

Der Kühlmodus kann, insbesondere infolge der Anordnung beziehungsweise Ausgestaltung der Ventileinrichtung, des Kühlers und des Pumpenelements, durch Drehrichtungsumkehr des Pumpenelements, bezogen auf eine Drehrichtung des Pumpenelements in dem Bremsmodus, besonders einfach realisiert werden. Dadurch kann beispielweise eine Teilezahl der Bremseinrichtung besonders gering gehalten werden. Somit kann ein besonders hohes Maß an Systemintegration erzielt werden. Ferner können Kosten und Bauraum der Bremseinrichtung besonders gering gehalten werden.

In Strömungsrichtung des von dem Pumpenelement zu dem Kühler geführten Fluids kann, insbesondere in der vierten Leitungsstrecke, ein insbesondere als Nebenstromfilter bezeichnetes Filterelement angeordnet sein. Das Filterelement ist von dem Fluid durchströmbar, wodurch das den Filter durchströmende Fluid mittels des Filterelements gefiltert und somit gereinigt werden kann.

Vorzugsweise wird das Pumpenelement in dem Bremsmodus in einem insbesondere als Vorwärtsbetrieb bezeichneten Vorwärtslauf betrieben und in dem Kühlmodus in einem dem Vorwärtslauf entgegengesetzten und insbesondere als Rückwärtsbetrieb bezeichneten Rückwärtslauf betrieben.

In einer weiteren Ausführungsform weist die Bremseinrichtung eine Abschalteinrichtung auf. Die Abschalteinrichtung ist dazu ausgebildet, den Druck des Fluids in der vierten Leitungsstrecke, insbesondere besonders schnell, besonders zu erhöhen, wodurch der zweite Steueranschluss, mit dem Druck des Fluids beaufschlagt werden kann, wodurch die Ventileinrichtung, insbesondere besonders schnell, von der ersten Ventilstellung in die zweite Ventilstellung bewegt wird.

In weiterer Ausgestaltung ist die die Abschalteinrichtung als hydraulische Abschalteinrichtung ausgebildet. Dabei weist die Abschalteinrichtung einen von dem Fluid durchströmbaren Eingang und einen von dem Fluid durchströmbaren Ausgang auf, welcher fluidisch mit dem zweiten Steueranschluss verbunden beziehungsweise verbindbar ist. Die hydraulische Abschalteinrichtung ist zwischen wenigstens zwei Stellungen bewegbar, wobei in einer ersten der Stellungen der Eingang und der Ausgang fluidisch verbunden sind, wodurch das Fluid von dem Eingang durch die Abschalteinrichtung hindurch zu dem Ausgang strömen kann, und in der zweiten Stellung ist der Eingang nicht fluidisch mit dem Ausgang verbunden, wodurch das Durchströmen der Abschalteinrichtung mit dem Fluid unterbleibt. Die Abschalteinrichtung ist als Sicherheitsabschaltung vorgesehen, wodurch eine Sicherheit der Bremseinrichtung gegenüber einer Beschädigung beziehungsweise Zerstörung der Bremseinrichtung besonders erhöht werden kann.

Beispielsweise kann der Eingang fluidisch, insbesondere unmittelbar, mit dem ersten Retarderausgang oder mit dem zweiten Retarderausgang verbunden sein. Dabei kann bei einem insbesondere als Schnellabschaltung oder Sicherheitsabschaltung bezeichneten Betriebsmodus, welcher beispielsweise auf den Bremsmodus folgen kann, die hydraulische Abschalteinrichtung von der zweiten Stellung in die erste Stellung bewegt werden. Dadurch kann das aus dem Retarder über den ersten Retarderausgang oder den zweiten Retarderausgang abgeführte Fluid durch die Abschalteinrichtung hindurch, insbesondere über den Eingang und den Ausgang, geführt werden, in die vierte Leitungsstrecke eingeleitet werden und dem zweiten Steueranschluss zugeführt werden, wodurch der Druck in der vierten Leitungsstrecke, insbesondere in dem zweiten Steueranschluss, besonders erhöht werden kann. Insbesondere dadurch, dass der Druck an dem zweiten Steueranschluss dann größer ist als der Druck des Fluids an dem ersten Steueranschluss, kann die Ventileinrichtung von der ersten Ventilstellung in die zweite Ventilstellung bewegt werden. Dadurch wird das Kupplungselement geöffnet, was insbesondere als Trennung des Rotors und der Antriebswelle bezeichnet werden kann. Optional kann es vorgesehen sein, dass mittels des Pumpenelements im Saugbetrieb der Druck des Fluids in der ersten Leitungsstrecke und damit an dem Steueranschluss besonders reduziert werden kann, wodurch die Druckdifferenz zwischen dem zweiten Steueranschluss und dem Steueranschluss besonders erhöht werden kann. Die Abschalteinrichtung kann insbesondere als mechanisch gekoppeltes Umschaltventil bezeichnet werden.

Alternativ kann der Eingang der Abschalteinrichtung über die erste Leitungsstrecke, insbesondere direkt oder zumindest unter Umgehung der Ventileinrichtung, fluidisch mit dem Pumpenelement verbunden sein und der Ausgang der Abschalteinrichtung kann über die vierte Leitungsstrecke fluidisch mit dem zweiten Steueranschluss verbunden sein. Dadurch kann bei der Schnellabschaltung das mittels des Pumpenelements von dem Hydrauliksumpf in die erste Leitungsstrecke geförderte Fluid von der ersten Leitungsstrecke über den Eingang durch die Abschalteinrichtung hindurch und über den Ausgang in die vierte Leitungsstrecke eingeleitet werden und damit dem zweiten Steueranschluss zugeführt werden, wodurch dieser von dem Fluid beaufschlagt wird. Dadurch kann der Druck des Fluids in der ersten Leitungsstrecke und somit an dem Steueranschluss besonders reduziert werden und der Druck in der vierten Leitungsstrecke und somit am zweiten Steueranschluss des Fluids kann besonders erhöht werden, wodurch der Druck an dem zweiten Steueranschluss höher ist als an dem ersten Steueranschluss, wodurch die Ventileinrichtung von der ersten Ventilstellung in die zweite Ventilstellung bewegt wird.

Alternativ kann die Abschalteinrichtung als pneumatische Abschalteinrichtung ausgebildet sein. Die pneumatische Abschalteinrichtung ist zwischen wenigstens zwei Stellungen bewegbar und weist einen von Luft durchströmbaren Eingang und einen von Luft durchströmbaren, von dem Eingang beabstandeten, Ausgang auf. Der Eingang ist fluidisch mit einem Druckluftreservoir verbunden, mittels welchem die pneumatische Abschalteinrichtung, insbesondere der Eingang, mit Druckluft versorgbar ist. Die pneumatische Abschalteinrichtung weist einen pneumatischen Zylinder auf, in welchem ein Kolbenelement translatorisch bewegbar aufgenommen ist. Das Kolbenelement kann dabei translatorisch relativ zu einer Zylinderwand des pneumatischen Zylinders zwischen einer ersten Kolbenstellung und einer zweiten Kolbenstellung bewegt werden. Der Zylinder weist eine von der Luft beziehungsweise der Druckluft durchströmbare Öffnung auf, welche fluidisch mit dem Ausgang verbunden beziehungsweise verbindbar ist. Das Kolbenelement ist mit der Ventileinrichtung, insbesondere dem Ventilschieber und/oder der Koppeleinrichtung, mechanisch verbunden beziehungsweise gekoppelt.

In einer ersten der Stellungen ist der Eingang fluidisch mit dem Ausgang verbunden, wodurch die Luft aus dem Reservoir über den Eingang und den Ausgang, durch die Öffnung hindurch in den Zylinder einleitbar ist, wodurch das Kolbenelement von der Druckluft beaufschlagt wird. In der zweiten der Stellungen ist der Eingang nicht fluidisch mit dem Ausgang verbunden, wodurch das Beaufschlagen des Kolbenelements mit der Druckluft unterbleibt. Durch das Beaufschlagen des Kolbenelements mit der Druckluft wird das Kolbenelement von der ersten Stellung in die zweite Stellung bewegt. Dadurch, dass das Kolbenelement und die Ventileinrichtung mechanisch gekoppelt sind, wird beim Bewegen des Kolbenelements in die zweite Kolbenstellung die Ventileinrichtung von der ersten Ventilstellung in die zweite Ventilstellung bewegt.

Die Schnellabschaltung kann schneller durchgeführt werden als die Abschaltung, worunter insbesondere verstanden werden kann, dass eine Zeitspanne, innerhalb welcher die Ventileinrichtung von der ersten Ventilstellung in die zweite Ventilstellung bewegt wird, bei der Schnellabschaltung geringer ist als bei der Abschaltung. Dadurch kann beispielsweise eine vorzeitige und somit ungewollte Befüllung des Retarders mit dem Fluid verhindert werden, wodurch beispielsweise eine Beschädigung oder eine Zerstörung der Bremseinrichtung, insbesondere des Kupplungselements oder der Koppeleinrichtung, verhindert werden kann. Dadurch kann eine Sicherheit der Bremseinrichtung besonders erhöht werden.

Alternativ kann beispielsweise bei dem batterieelektrischen Fahrzeug oder bei dem Brennstoffzellenfahrzeug auf die Abschalteinrichtung und somit die Sicherheitsabschaltung verzichtet werden, wenn die elektrische Maschine zum Antreiben des Kraftfahrzeugs das Bremsmoment bei einem aktiven Antiblockiersystem (ABS) besonders schnell und somit schnell genug kompensieren kann.

Vorzugsweise wird die Abschalteinrichtung elektrohydraulisch oder elektropneumatisch aktiviert. Darunter kann insbesondere verstanden werden, dass bei der als hydraulische Abschalteinrichtung ausgebildeten Abschalteinrichtung und bei der als pneumatische Abschalteinrichtung ausgebildeten Abschalteinrichtung die jeweilige Abschalteinrichtung mittels eines Elektromotors von der ersten Stellung in die zweite Stellung bewegt werden kann.

Vorzugsweise weist die Abschalteinrichtung wenigstens ein Federelement auf, mittels welchem die Abschalteinrichtung von der zweiten Stellung in die erste Stellung bewegt werden kann und/oder von der ersten Stellung in die zweite Stellung bewegt werden kann.

Die Bremseinrichtung umfasst einen von einem Fluid durchströmbaren und wenigstens zwei Leitungsstrecken aufweisenden Fluidpfad, in welchem wenigstens ein Pumpenelement angeordnet ist. Mittels des Pumpenelements wird das Fluid durch den Fluidpfad hindurchgefördert. In dem Fluidpfad sind ein von dem Fluid durchströmbarer Kühler und wenigstens eine von dem Fluid durchströmbare, wenigstens einen Ventileingang und einen Ventilausgang aufweisende Ventileinrichtung angeordnet, welche über den Ventileingang mittels einer ersten der Leitungsstrecken fluidisch mit dem Pumpenelement verbunden ist. Bei dem Verfahren wird die Ventileinrichtung zwischen wenigstens zwei Ventilstellungen hin- und her bewegt.

Die Bremseinrichtung weist einen mit dem Fluidpfad fluidisch verbunden Hydrauliksumpf auf. Ferner weist die Bremseinrichtung einen Retarder auf, welcher einen Stator, einen separat von dem Stator ausgebildeten Rotor, einen Retardereingang, über welchen der Retarder mittels der zweiten der Leitungsstrecken fluidisch über den Ventilausgang mit der Ventileinrichtung verbunden ist, und wenigstens einen Retarderausgang umfasst, über welchen das Fluid aus dem Retarder abgeführt und in den Fluidpfad eingeleitet wird. In einer ersten der Ventilstellungen ist beziehungsweise wird der Ventileingang mit dem Ventilausgang fluidisch verbunden, wodurch das die erste Leitungsstrecke durchströmende Fluid über den Ventileingang durch die Ventileinrichtung hindurch, über den Ventilausgang und die zweite Leitungsstrecke dem Retardereingang zugeführt wird. In der zweiten Ventilstellung ist beziehungsweise wird der Ventileingang nicht fluidisch mit dem Ventilausgang verbunden, wodurch das die erste Leitungsstrecke durchströmende Fluid nicht durch die Ventileinrichtung hindurch strömt und somit nicht über die zweite Leitungsstrecke dem Retardereingang zugeführt wird.

Um die Bremseinrichtung besonders vorteilhaft kühlen zu können, ist es erfindungsgemäß vorgesehen, dass der Fluidpfad eine separat von der ersten und der zweiten Leitungsstrecke ausgebildete, dritte Leitungsstrecke, über welche der Retarderausgang und der Kühler unter Umgehung der Ventileinrichtung fluidisch verbunden sind, und eine in der dritten Leitungsstrecke angeordnete Verzweigungsstelle aufweist, über welche der Kühler unter Umgehung des Retarders, der Ventileinrichtung und des Pumpenelements fluidisch mit dem Hydrauliksumpf verbunden ist. Dabei wird der Kühler über die Ventileinrichtung unter Umgehung des Retarders und des Hydrauliksumpfs fluidisch mit der ersten Leitungsstrecke verbunden oder der Kühler ist über die Ventileinrichtung unter Umgehung des Retarders und des Hydrauliksumpfs fluidisch mit der ersten Leitungsstrecke verbindbar.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: eine schematische Teilschnittansicht einer erfindungsgemäßen Bremseinrichtung in einer ersten Ventilstellung; und
- Fig. 2: eine schematische Teilschnittansicht einer erfindungsgemäßen Bremseinrichtung in einer zweiten Ventilstellung.

In den Fig. sind gleiche oder funktionsgleiche Elemente mit gleichen Bezugszeichen versehen.

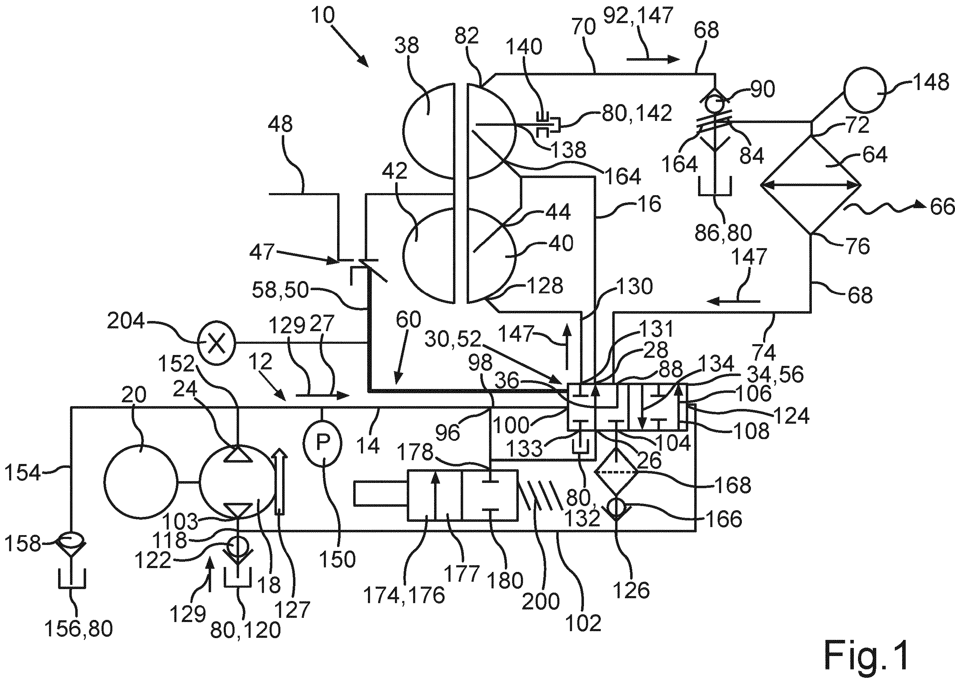

Fig. 1 zeigt in einer schematischen Teilschnittansicht eine Bremseinrichtung 10 für ein Kraftfahrzeug. Das Kraftfahrzeug ist vorzugsweise als Nutzfahrzeug ausgebildet. Beispielsweise ist das Kraftfahrzeug als Kraftwagen, insbesondere als Personenkraftwagen, Nutzkraftwagen oder Lastkraftwagen oder als Personenbus ausgebildet.

Die Bremseinrichtung 10 umfasst einen von einem Fluid durchströmbaren Fluidpfad 12, welcher insbesondere als Hydrauliksystem bezeichnet werden kann. Der Fluidpfad 12 weist wenigstens zwei von dem Fluid durchströmbare Leitungsstrecken 14, 16 auf. In dem Fluidpfad 12 ist wenigstens ein Pumpenelement 18 zum Hindurchfördern des Fluids durch den Fluidpfad 12 angeordnet. Das Pumpenelement 18 ist vorzugsweise als elektrische Pumpe ausgebildet. Das als elektrische Pumpe ausgebildete Pumpenelement 18 kann von einem Elektromotor 20 angetrieben werden. Über einen Pumpenausgang 24 des Pumpenelements 18 ist das Pumpenelement 18 fluidisch mit einer ersten der Leitungsstrecken 14 verbunden. In dem Fluidpfad 12 ist wenigstens eine von dem Fluid durchströmbare, wenigstens einen Ventileingang 26 und einen Ventilausgang 28 aufweisende und zwischen wenigstens zwei Ventilstellungen 30, 32 bewegbare Ventileinrichtung 34 angeordnet. Die Ventileinrichtung 34 ist über den Ventileingang 26 fluidisch mit der ersten Leitungsstrecke 14 verbunden, wodurch der Ventileingang 26 fluidisch mit dem Pumpenelement 18, insbesondere dem Pumpenausgang 24, verbunden ist. Die Ventileinrichtung 34 weist einen von dem Fluid durchströmbaren Durchgangskanal 36 auf, welcher fluidisch mit dem Ventileingang 26 und dem Ventilausgang 28 verbindbar ist.

Die Bremseinrichtung 10 weist einen Retarder 38 auf, welcher einen Stator 40 und einen separat von dem Stator 40 ausgebildeten und um eine Drehachse relativ zu einem Gehäuseelement des Retarders 38 verdrehbaren Rotor 42 umfasst. Der Retarder 38 weist einen Retardereingang 44 auf, über welchen der Retarder 38 mittels der zweiten Leitungsstrecke 16 fluidisch über den Ventilausgang 28 mit der Ventileinrichtung 34 verbunden ist.

In einer ersten der Ventilstellungen 30 ist der Ventileingang 26 über den Durchgangskanal 36 fluidisch mit dem Ventilausgang 28 verbunden, wodurch das die erste Leitungsstrecke 14 durchströmende Fluid über den Ventileingang 26 durch die Ventileinrichtung 34 hindurch, über den Ventilausgang 28 und über die zweite Leitungsstrecke 16 dem Retardereingang 44 zuführbar ist. Dadurch kann das Fluid in den Retarder 38 eingeleitet werden. In der Fig. 1 befindet sich die Ventileinrichtung 34 in der ersten Ventilstellung 30.

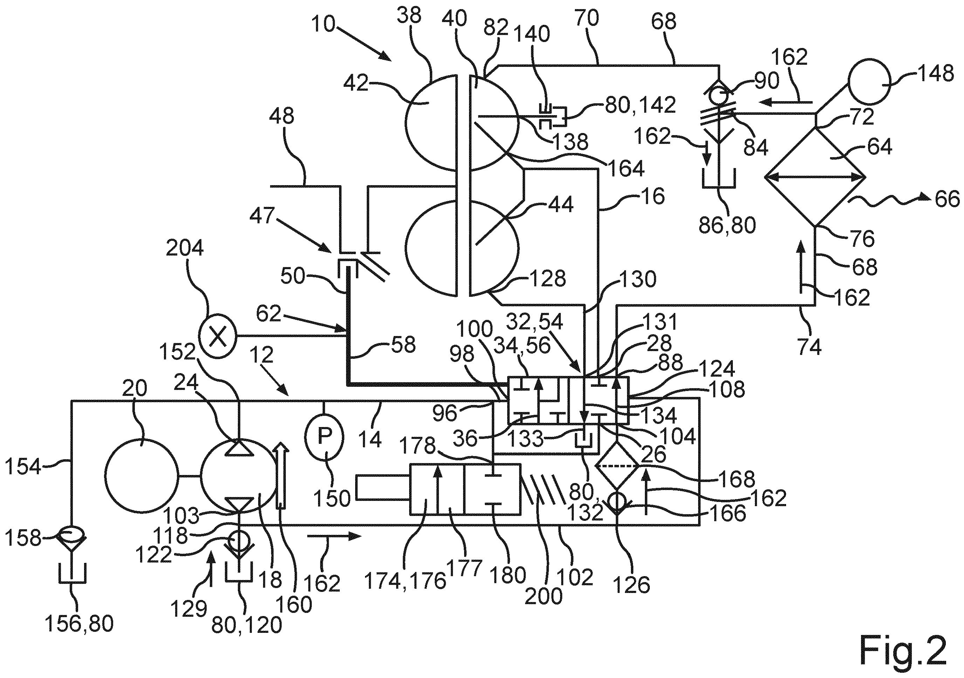

Fig. 2 zeigt in einer schematischen Teilschnittansicht die Bremseinrichtung 10, wobei sich die Ventileinrichtung 34 in der zweiten Ventilstellung 32 befindet. In der zweiten Ventilstellung 32 ist der Ventileingang 26 nicht fluidisch mit dem Ventilausgang 28 verbunden, wodurch das die erste Leitungsstrecke 14 durchströmende Fluid nicht über den Ventileingang 26 in den Durchgangskanal 36 gelangen kann und somit nicht über den Ventilausgang 28 in die zweite Leitungsstrecke 16 eingeleitet werden kann. Dadurch unterbleibt in der zweiten Ventilstellung 32 das Zuführen des Fluids von der ersten Leitungsstrecke 14 über die Ventileinrichtung 34 zu dem Retarder 38, insbesondere dem Retardereingang 44.

Um Bauraum und Kosten der Bremseinrichtung 10 besonders gering halten zu können, weist die Bremseinrichtung 10 wenigstens ein Kupplungselement 47 auf, über welches der Rotor 42 mit einer Antriebswelle 48 des Kraftfahrzeugs koppelbar und von der Antriebswelle 48 entkoppelbar ist. Zudem weist die Bremseinrichtung 10 eine Koppeleinrichtung 50 auf, mittels welcher der Rotor 42 und die Antriebswelle 48 durch das Bewegen der Ventileinrichtung 34 in die erste Ventilstellung 30 über das Kupplungselement 47 koppelbar sind und durch das Bewegen der Ventileinrichtung 34 in die zweite Ventilstellung 32 entkoppelbar sind. Wenn sich die Ventileinrichtung 34 in der ersten Ventilstellung 30 befindet, ist das Kupplungselement 47 geschlossen, wodurch die Antriebswelle 48 und der Rotor 42 mechanisch gekoppelt sind. Wenn sich die Ventileinrichtung 34 in der zweiten Ventilstellung 32 befindet, ist das Kupplungselement 47 geöffnet, wodurch die Antriebswelle 48 und der Rotor 42 entkoppelt sind.

In weiterer Ausgestaltung weist die Ventileinrichtung 34 einen zwischen wenigstens zwei Positionen 52, 54 bewegbaren Ventilschieber 56 auf. Der Ventilschieber 56 ist in der ersten Ventilstellung 30 in einer ersten der Positionen 52 angeordnet und in der zweiten Ventilstellung 32 in der zweiten der Positionen 54 angeordnet. Die Koppeleinrichtung 50 ist als mechanisch mit dem Ventilschieber 56 gekoppelter Aktuator 58 ausgebildet, welcher zwischen wenigstens zwei Aktuatorpositionen 60, 62 bewegbar ist. Der Aktuator 58 ist durch Bewegen des Ventilschiebers 56 in die erste Position 52 in eine erste der Aktuatorpositionen 60 bewegbar, wodurch der Rotor 42 und die Antriebswelle 48 über das Kupplungselement 47 gekoppelt sind. Durch das Bewegen des Ventilschiebers 56 in die zweite Position 54 ist der Aktuator 58 in die zweite der Aktuatorpositionen 62 bewegbar, wodurch der Rotor 42 und die Antriebswelle 48 entkoppelt sind.

In weiterer Ausgestaltung ist ein von dem Fluid durchströmbarer Kühler 64, mittels welchem Wärme 66 von dem Fluid abführbar ist, in einer von dem Fluid durchströmbaren und separat von der ersten und der zweiten Leitungsstrecke 14, 16 ausgebildeten, dritten Leitungsstrecke 68 angeordnet. Ein erster Streckenabschnitt 70 der dritten Leitungsstrecke 68 ist fluidisch mit einem Kühlereingang 72 des Kühlers 64 verbunden. Ein zweiter Streckenabschnitt 74 der dritten Leitungsstrecke 68 ist fluidisch mit einem Kühlerausgang 76 des Kühlers 64 verbunden.

In weiterer Ausgestaltung weist die Bremseinrichtung 10 einen fluidisch mit dem Fluidpfad 12 verbundenen beziehungsweise verbindbaren Hydrauliksumpf 80 auf, in welchem das Fluid aufgenommen beziehungsweise gespeichert werden kann. Vorzugsweise handelt es sich bei dem Fluid um Öl, welches als Getriebeöl eines Getriebes des Kraftfahrzeugs vorgesehen ist, wodurch es sich bei dem Hydrauliksumpf 80 um einen gemeinsamen Sumpf für das Getriebe und die Bremseinrichtung 10, insbesondere den Retarder 38 beziehungsweise den Fluidpfad 12, handelt.

Um die Bremseinrichtung 10 besonders vorteilhaft kühlen zu können, sind ein Retarderausgang 82 des Retarders 38 und der Kühler 64 über die dritte Leitungsstrecke 68 unter Umgehung der Ventileinrichtung 34 fluidisch verbunden. Mit anderen Worten ausgedrückt ist die dritte Leitungsstrecke 68 fluidisch mit dem Retarderausgang 82 des Retarders 38 verbunden, wodurch das Fluid über den Retarderausgang 82 aus dem Retarder 38 abführbar, in die dritte Leitungsstrecke 68, insbesondere den ersten Streckenabschnitt 70, einleitbar ist und dem Kühler 64, insbesondere dem Kühlereingang 72 zuführbar ist, wodurch das Fluid gekühlt werden kann. In der dritten Leitungsstrecke 68, insbesondere in dem ersten Streckenabschnitt 70, ist eine Verzweigungsstelle 84 angeordnet, über welche der Kühler 64 unter Umgehung des Retarders 38, der Ventileinrichtung 34 und des Pumpenelements 18 über einen ersten Sumpfzugang 86 fluidisch mit dem Hydrauliksumpf 80 verbunden ist. Zudem ist der Kühler 64 über die Ventileinrichtung 34 unter Umgehung des Retarders 38 und des Hydrauliksumpfs 80 fluidisch mit der ersten Leitungsstrecke 14 verbunden oder verbindbar.

In weiterer Ausgestaltung weist die Ventileinrichtung 34 einen von dem Fluid durchströmbaren und von dem Ventileingang 26 und dem Ventilausgang 28 beabstandeten, zweiten Ventilausgang 88 auf, welcher fluidisch mit der dritten Leitungsstrecke 68 verbunden beziehungsweise verbindbar ist. Der zweite Ventilausgang 88 ist in der ersten Ventilstellung 30, insbesondere über den Durchgangskanal 36, mit dem Ventileingang 26 und dem Ventilausgang 28 fluidisch verbunden und in der zweiten Ventilstellung 32 ist der zweite Ventilausgang 88 nicht, insbesondere nicht über den Durchgangskanal 36, mit dem Ventileingang 26 und dem Ventilausgang 28 verbunden. Der Kühler 64 ist über den zweiten Ventilausgang 88 der Ventileinrichtung 34 unter Umgehung des Retarders 38 und des Hydrauliksumpfs 80 fluidisch mit der ersten Leitungsstrecke 14 verbunden oder verbindbar. Dadurch kann das den Kühler 64 in einer ersten Strömungsrichtung des Kühlers durchströmende Fluid in der ersten Ventilstellung 30 über den zweiten Ventilausgang 88 durch die Ventileinrichtung 34 hindurch, über den Ventilausgang 28 in die zweite Leitungsstrecke 16 eingeleitet werden und dadurch über den Retardereingang 44 dem Retarder 38, insbesondere erneut, zugeführt werden. Dadurch kann ein Rezirkulationskreislauf des gekühlten Fluids realisiert werden. Insbesondere dadurch, dass das Fluid über den zweiten Ventilausgang 88 der Ventileinrichtung 34 zugeführt, insbesondere in den Durchgangskanal 36 eingeleitet werden kann, kann der zweite Ventilausgang 88 insbesondere als Ventilzugang bezeichnet werden.

In weiterer Ausgestaltung weist die Verzweigungsstelle 84 ein Wechselventil 90 auf beziehungsweise die Verzweigungsstelle 84 ist als das Wechselventil 90 ausgebildet. Vorzugsweise ist das Wechselventil 90 als Wechselventil mit Anlegefeder, ausgebildet. Das Wechselventil 90 ist vorzugsweise dazu ausgebildet, eine Strömung des Fluids in einer Strömungsrichtung 92 von dem Retarderausgang 82 durch das Wechselventil 90 hindurch zu dem Kühler 64 zuzulassen und eine Strömung des Fluids in einer der Strömungsrichtung 92 entgegengesetzten Strömungsrichtung von dem Kühler 64 und/oder dem ersten Sumpfzugang 86 durch das Wechselventil 90 hindurch zu dem Retarderausgang 82 zu unterbinden. Das Wechselventil 90 ist vorzugsweise dazu ausgebildet, eine Strömung des Fluids in der Strömungsrichtung 92 von dem Retarderausgang 82 durch das Wechselventil 90 hindurch über den ersten Sumpfzugang 86 zu dem Hydrauliksumpf 80 zu unterbinden. Das Wechselventil ist vorzugsweise dazu ausgebildet, eine Strömung von dem Kühler 64 zu dem ersten Sumpfzugang 86 durch das Wechselventil 90 hindurch zuzulassen und/oder eine entgegengesetzte Strömung von dem ersten Sumpfzugang 86 durch das Wechselventil 90 hindurch zuzulassen.

In einer weiteren Ausführungsform weist die erste Leitungsstrecke 14 eine in Strömungsrichtung 27 des von dem Pumpenelement 18 zu dem Ventileingang 26 strömenden Fluids zwischen dem Pumpenelement 18 und dem Ventileingang 26 angeordnete Entnahmestelle 96 auf. Über die Entnahmestelle 96 ist die erste Leitungsstrecke 14 fluidisch mit einem von dem Fluid durchströmbaren ersten Leitungselement 98 verbunden. Das erste Leitungselement 98 ist einenends fluidisch mit der Entnahmestelle 96 verbunden und andernends mit einem Steueranschluss 100 der Ventileinrichtung 34 fluidisch verbunden. Dadurch ist das Pumpenelement 18, insbesondere der Pumpenausgang 24, über die Entnahmestelle 96 fluidisch mit dem Steueranschluss 100 der Ventileinrichtung 34 verbunden, wodurch der Steueranschluss 100 mittels des Pumpenelements 18 von dem Fluid beaufschlagbar ist, wodurch die Ventileinrichtung 34 von der zweiten Ventilstellung 32 in die erste Ventilstellung 30 bewegbar ist. Dadurch kann das geschlossene Kupplungselement 47 geöffnet werden.

In weiterer Ausgestaltung weist der Fluidpfad 12 eine separat von den Leitungsstrecken 14, 16, 68 ausgebildete und von dem Fluid durchströmbare, vierte Leitungsstrecke 102 auf, über welche das Pumpenelement 18 und die Ventileinrichtung 34 unter Umgehung der ersten Leitungsstrecke 14, des Retarders 38, des Ventileingangs 26, des Ventilausgangs 28 und des Kühlers 64 fluidisch verbunden sind. Das Pumpenelement 18 ist dabei über einen von dem Pumpenausgang 24 beabstandeten Pumpeneingang 103 über die vierte Leitungsstrecke 102 fluidisch mit der Ventileinrichtung 34 verbunden.

In einer weiteren Ausführungsform weist die Ventileinrichtung 34 einen von dem Ventileingang 26 beabstandeten und fluidisch mit der vierten Leitungsstrecke 102 verbundenen, zweiten Ventileingang 104 und den von dem Ventilausgang 28 beabstandeten und mit dem Hydrauliksumpf, insbesondere über den ersten Sumpfzugang 86, verbundenen, zweiten Ventilausgang 88 auf. In der zweiten Ventilstellung 32 ist das die vierte Leitungsstrecke 102 durchströmende Fluid über den zweiten Ventileingang 104, durch die Ventileinrichtung 34 hindurch, über den zweiten Ventilausgang 88, insbesondere über den ersten Sumpfzugang 86, in den Hydrauliksumpf 80 einleitbar.

Das Pumpenelement 18 ist über die vierte Leitungsstrecke 102 unter Umgehung der ersten Leitungsstrecke 14, des Retarders 38, des Ventileingangs 26, des Ventilausgangs 28 und des Kühlers 64 fluidisch mit dem zweiten Ventileingang 104 verbunden. Die Ventileinrichtung 34 weist einen von dem Durchgangskanal 36 beabstandeten und von dem Fluid durchströmbaren, zweiten Durchgangskanal 108 auf, welcher fluidisch mit dem zweiten Ventileingang 104 und dem zweiten Ventilausgang 88 verbindbar ist.

In weiterer Ausgestaltung ist der zweite Ventilausgang 88 unter Umgehung des Retarders und des Pumpenelements fluidisch mit dem Kühler 64, insbesondere dem Kühlerausgang 76, verbunden beziehungsweise verbindbar. In der zweiten Ventilstellung 32 sind der zweite Ventileingang 104 und der zweite Ventilausgang 88 fluidisch verbunden, wodurch das die vierte Leitungsstrecke 102 durchströmende Fluid über den zweiten Ventileingang 104 in den zweiten Durchgangskanal 108 einleitbar ist und dadurch durch die Ventileinrichtung 34 hindurch über den zweiten Ventilausgang 88, über die dritte Leitungsstrecke 68 und über den Kühlerausgang 76 dem Kühler 64 zuführbar ist. Dabei ist das Fluid durch den Kühler 64 hindurchführbar und somit mittels des Kühlers 64 kühlbar. Dabei durchströmt das Fluid den Kühler 64 in einer der ersten Strömungsrichtung des Kühlers entgegengesetzten, zweiten Strömungsrichtung des Kühlers. Anschließend ist das gekühlte Fluid über den Kühlereingang 72 aus dem Kühler 64 abführbar und über die Verzeigungsstelle 84 und den ersten Sumpfzugang 86 in den Hydrauliksumpf 80 einleitbar. In der ersten Ventilstellung 30 ist der zweite Ventileingang 104 nicht fluidisch mit dem zweiten Ventilausgang 88 verbunden, wodurch das Einleiten des die vierte Leitungsstrecke 102 durchströmenden Fluids über die Ventileinrichtung 34, insbesondere den zweiten Durchgangskanal 108, über den Kühler 64 und den ersten Sumpfzugang 86 in den Hydrauliksumpf 80 unterbleibt.

In weiterer Ausgestaltung ist eine in der vierten Leitungsstrecke 102 angeordnete, erste Verbindungsstelle 118 vorgesehen, das Pumpenelement 18, insbesondere der Pumpeneingang 103, unter Umgehung des Retarders 38 und der Ventileinrichtung 34 und des Kühlers 64 über einen zweiten Sumpfzugang 120 fluidisch mit dem Hydrauliksumpf 80 verbunden ist. Zwischen dem zweiten Sumpfzugang 120 und der ersten Verbindungsstelle 118 ist ein von dem Fluid durchströmbares, erstes Rückschlagventil 122 angeordnet. Das erste Rückschlagventil 122 ist dazu ausgebildet, eine Strömung des Fluids von dem zweiten Sumpfzugang 120 zu der ersten Verbindungsstelle 118 durch das erste Rückschlagventil 122 hindurch zuzulassen und eine entgegengesetzte Strömung des Fluids von der ersten Verbindungsstelle 118 zu dem zweiten Sumpfzugang 120 zu unterbinden.

In einer weiteren Ausführungsform weist die Ventileinrichtung 34 einen von dem Steueranschluss 100 beabstandeten, zweiten Steueranschluss 124 auf. Der zweite Steueranschluss 124 ist über eine zweite Verbindungsstelle 126 fluidisch mit der vierten Leitungsstrecke 102 verbunden, wodurch der zweite Steueranschluss 124 mittels des Pumpenelements 18 über den Pumpeneingang 103 und die vierte Leitungsstrecke 102 von dem Fluid beaufschlagbar ist. Das heißt, das die erste Leitungsstrecke 14 durchströmende Fluid kann beispielsweise entgegengesetzt der Strömungsrichtung 27 von dem Pumpenelement 18 angesaugt werden, über den Pumpenausgang 24 durch das Pumpenelement 18 hindurch und über den Pumpeneingang 103 in die vierte Leitungsstrecke 102 eingeleitet werden, wobei das die vierte Leitungsstrecke 102 durchströmende Fluid mittels des Pumpenelements 18 über die zweite Verbindungsstelle 126 dem zweiten Steueranschluss 124 zugeführt wird. Durch das Beaufschlagen des zweiten Steueranschlusses 124 mit dem Fluid beziehungsweise einem Druck des Fluids ist die Ventileinrichtung 34 von der ersten Ventilstellung 30 in die zweite Ventilstellung 32 bewegbar. Dadurch kann das geschlossene Kupplungselement 47 geöffnet werden.

Bei einem insbesondere als Synchronisation bezeichneten Betriebsmodus der Bremseinrichtung 10 befindet sich die Ventileinrichtung 34 zunächst in der zweiten Ventilstellung 32. Mittels des Pumpenelements 18 wird das Fluid aus dem zweiten Sumpfzugang 120 aus dem Hydrauliksumpf 80 angesaugt beziehungsweise entnommen und über die erste Verbindungsstelle 118 durch den Pumpeneingang 103 und den Pumpenausgang 24 in die erste Leitungsstrecke 14 eingeleitet. Das die erste Leitungsstrecke 14 durchströmende Fluid wird mittels des Pumpenelements 18 über die Entnahmestelle 96 zu dem Steueranschluss 100 gefördert, wodurch der Steueranschluss 100 von dem Fluid beziehungsweise von einem Druck des Fluids beaufschlagt wird. Dies ist mittels Pfeilen 129 veranschaulicht. Dadurch wird der Druck des Fluids an dem Steueranschluss 100 mittels des Pumpenelements 18 besonders erhöht, wodurch der Druck des Fluids an dem Steueranschluss 100 größer ist als der Druck des Fluids an dem zweiten Steueranschluss 124. Vorzugsweise handelt es sich bei dem an dem Steueranschluss 100 anliegenden Druck um einen insbesondere als Niederdruck bezeichneten Druck des Fluids, wobei der Druck beispielweise zwischen 3 und 5 bar sein kann. In der vierten Leitungsstrecke 102 und somit an dem zweiten Steueranschluss 124 liegt ein insbesondere als Saugdruck bezeichneter Druck des Fluids vor. Es liegt somit eine positive Druckdifferenz zwischen den Steueranschlüssen 100, 124 vor. Infolge der positiven Druckdifferenz wird die Ventileinrichtung 34 ausgehend von der zweiten Ventilstellung 32 in Richtung der ersten Ventilstellung 30 bewegt. Infolgedessen wird der Ventilschieber 56 ausgehend von der zweiten Position 54 in Richtung der ersten Position 52 bewegt, wodurch der mechanisch mit dem Ventilschieber 56 gekoppelte Aktuator 58 ausgehend von der zweiten Aktuatorposition 62 in Richtung der ersten Aktuatorposition 60 bewegt wird. Dadurch werden mittels des Kupplungselements 47 jeweilige Drehzahlen der Antriebswelle 48 und des Rotors 42 synchronisiert, insbesondere mittels Sperrsynchronisierung. Wenn die Ventileinrichtung 34 von der zweiten Ventilstellung 32 in die erste Ventilstellung 30 bewegt worden ist, liegt ein Gleichlauf der Drehzahlen der Antriebswelle 48 und des Rotors 42 vor. Darunter kann insbesondere verstanden werden, dass die jeweiligen Drehzahlen des Rotors 42 und der Antriebswelle 48 identisch sind.

In weiterer Ausgestaltung weist der Retarder 38 einen von dem Retarderausgang 82 beabstandeten, zweiten Retarderausgang 128 auf, welcher fluidisch mit einem von dem Fluid durchströmbaren, zweiten Leitungselement 130 verbunden ist. Die Bremseinrichtung 10 weist einen über das zweite Leitungselement 130 fluidisch mit dem zweiten Retarderausgang 128 verbundenen und von dem Ventileingang 26 und dem zweiten Ventileingang 104 beabstandeten, dritten Ventileingang 131 der Ventileinrichtung 34 auf. Die Bremseinrichtung 10 umfasst einen von dem Ventilausgang 28 und dem zweiten Ventilausgang 88 beabstandeten und mit dem Hydrauliksumpf 80 über einen dritten Sumpfzugang 132 fluidisch verbundenen, dritten Ventilausgang 133 der Ventileinrichtung 34. In der zweiten Ventilstellung 32 sind der dritte Ventileingang 131 und der dritte Ventilausgang 133 fluidisch verbunden, wodurch das über den zweiten Retarderausgang 128 aus dem Retarder 38 abgeführte Fluid über den dritten Ventileingang 131, durch die Ventileinrichtung 34 hindurch, über den dritten Ventilausgang 133 und über den dritten Sumpfzugang 132 in den Hydrauliksumpf 80 einleitbar ist. In der ersten Ventilstellung 30 ist der dritte Ventileingang 131 nicht mit dem dritten Ventilausgang 133 fluidisch verbunden.

Die Ventileinrichtung 34 weist einen von dem Fluid durchströmbaren und von dem Durchgangskanal 36 und dem zweiten Durchgangskanal 108 beabstandeten, insbesondere separat ausgebildeten, dritten Durchgangskanal 134 auf, welcher mit dem dritten Ventileingang 131 und mit dem dritten Ventilausgang 133 fluidisch verbindbar ist. In der zweiten Ventilstellung 32 ist der dritte Durchgangskanal 134 zumindest teilweise freigegeben, wodurch das Fluid über den dritten Ventileingang 131 durch den dritten Durchgangskanal 134 hindurch zu dem dritten Ventilausgang 133 geführt werden kann und über den dritten Sumpfzugang 132 in den Hydrauliksumpf 80 eingeleitet werden kann. In der ersten Ventilstellung 30 ist der dritte Durchgangskanal 134 vollständig versperrt, wodurch das Zuführen des Fluids von dem dritten Ventileingang 131 zu dem dritten Ventilausgang 133 durch den dritten Durchgangskanal 134 unterbleibt. Dadurch kann in der zweiten Ventilstellung 32 beispielsweise das Fluid aus dem Retarder 38 über den zweiten Retarderausgang 128 abfließen und über den dritten Sumpfzugang 132 in den Hydrauliksumpf 80 eingeleitet werden, wodurch ein Druckabbau eines Drucks des Fluids in dem Retarder 38 erzielt werden kann. Dadurch kann der Retarder 38 entlüftet werden. Dies kann beispielsweise für die Synchronisierung beziehungsweise vor der Synchronisierung sinnvoll sein.

Vorzugsweise ist es bei der Synchronisation vorgesehen, dass vor dem Bewegen der Ventileinrichtung 34 in Richtung der ersten Ventilstellung 30, während sich die Ventileinrichtung 34 in der zweiten Ventilstellung 32 befindet, für einen Druckabbau in dem Retarder 38 das Fluid aus dem Retarder 38 über den zweiten Retarderausgang 128 abgeführt wird, in das zweite Leitungselement 130 eingeleitet wird und über den dritten Ventileingang 131, den dritten Ventilausgang 133 und den dritten Sumpfzugang 132 in den Hydrauliksumpf 80 eingeleitet wird.

In dem in der Fig. 1 und der Fig. 2 gezeigten Ausführungsbeispiel weist der Retarder 38 einen von dem Fluid durchströmbaren und von dem Retarderausgang 82 und dem zweiten Retarderausgang 128 beabstandeten dritten Retarderausgang 138 auf. Der dritte Retarderausgang 138 ist über eine Drosselstelle 140 und über einen vierten Sumpfzugang 142 mit dem Hydrauliksumpf 80 fluidisch verbunden. Dadurch kann das über den dritten Retarderausgang 138 aus dem Retarder 38 abgeführte Fluid über die Drosselstelle 140 und den vierten Sumpfzugang 142 in den Hydrauliksumpf 80 eingeleitet werden.

Der Synchronisation kann beispielsweise ein insbesondere als Bremsmodus bezeichneter Betriebsmodus der Bremseinrichtung 10 nachfolgen. In dem Bremsmodus wird das Fluid mittels des Pumpenelements 18 aus der vierten Leitungsstrecke 102 angesaugt, wodurch das Fluid über den zweiten Sumpfzugang 120 aus dem Hydrauliksumpf 80 entnommen wird, in die vierte Leitungsstrecke 102 eingeleitet wird und über die erste Verbindungsstelle 118 das Pumpenelement 18 in einer ersten Strömungsrichtung 127 des Pumpenelements 18 durchströmt. Dabei strömt das Fluid über den Pumpeneingang 103 und den Pumpenausgang 24 in die erste Leitungsstrecke 14. Die ist mittels der Pfeile 129 veranschaulicht. Dadurch wird in der ersten Leitungsstrecke 14 mittels des Pumpenelements 18 ein Druck des Fluids aufgebaut, welcher vorzugsweise größer ist als bei der Synchronisation. Vorzugsweise handelt es sich bei dem Druck des Fluids in dem ersten Leitungsstrecke 14 und in der zweiten Leitungsstrecke 16 um einen insbesondere als Hochdruck bezeichneten Druck, welcher beispielweise zwischen 5 bar und 15 bar sein kann. Vorzugsweise liegt in der dritten Leitungsstrecke 68 der Hochdruck vor. Vorzugsweise liegt in der vierten Leitungsstrecke 102 der Saugdruck vor. Dadurch, dass sich die Ventileinrichtung 34 in der ersten Ventilstellung 30 befindet, kann das die erste Leitungsstrecke 14 durchströmende Fluid über den Ventileingang 26 durch den Durchgangskanal 36 hindurch über den Ventilausgang 28 in die zweite Leitungsstrecke 16 eingeleitet werden und somit über den Retardereingang 44 dem Retarder 38 zugeführt werden kann. Somit wird das Fluid in den Retarder 38 eingeleitet. Dadurch kann der Druck des Fluids in dem Retarder 38 besonders erhöht werden, insbesondere gegenüber der Synchronisation. Insbesondere infolge des besonders hohen Drucks des Fluids in dem Retarder 38 wird der Rotor 42 durch das Fluid abgebremst, wodurch infolge der mechanischen Kopplung des Rotors 42 mit der Antriebswelle 48 über das geschlossene Kupplungselement 47 die Antriebswelle 48 verzögert wird. Dadurch kann das Kraftfahrzeug abgebremst werden.

Das Fluid wird in dem Bremsmodus über den Retarderausgang 82 aus dem Retarder 38 abgeführt und in die dritte Leitungsstrecke 68 eingeleitet, durch den Kühler 64 hindurchgeführt, über den insbesondere als Ventilzugang bezeichneten, zweiten Ventilausgang 88, insbesondere durch den ersten Durchgangskanal 36 hindurch, und den Ventilausgang 28 erneut in die erste Leitungsstrecke 14 eingeleitet. Dies ist mittels Pfeilen 147 veranschaulicht. Dadurch kann das Fluid in dem Bremsmodus besonders gut gekühlt werden.

In der dritten Leitungsstrecke 68, insbesondere in dem ersten Streckenabschnitt 70, ist zwischen der Verzweigungsstelle 84 und dem Kühler 64 ein Temperatursensor 148 angeordnet. Der Temperatursensor 148 ist dazu ausgebildet, eine Temperatur des die dritte Leitungsstrecke 68 durchströmenden Fluids zu erfassen. Beispielsweise kann es vorgesehen sein, dass, wenn in dem Bremsmodus die mittels des Temperatursensors 148 erfasste Temperatur des Fluids einen vorgegebenen Schwellenwert der Temperatur überschreitet, ein von der Bremseinrichtung 10, insbesondere des Retarders 38, bewirktes Bremsmoment auf die Antriebswelle 48 begrenzt wird. Dies kann beispielsweise dadurch erfolgen, dass mittels des Pumpenelements 18 ein Massenstrom des von der vierten Leitungsstrecke 102 in die erste Leitungsstrecke 14 geförderten Fluids besonders vermindert wird. In der ersten Leitungsstrecke 14 ist, insbesondere zwischen dem Pumpenausgang 24 und der Entnahmestelle 96, ein Drucksensor 150 angeordnet, mittels welchem ein Druck des die erste Leitungsstrecke 14 durchströmenden Fluids erfassbar ist.

Ein insbesondere als Bereitschaftsmodus bezeichneter Betriebsmodus der Bremseinrichtung 10 kann insbesondere auf den Bremsmodus oder auf die Synchronisation nachfolgen. Dabei wird mittels des Pumpenelements 18 in der ersten Leitungsstrecke 14 der Druck des Fluids, insbesondere gegenüber dem Bremsmodus, besonders reduziert. Beispielsweise wird der Massenstrom des Fluids besonders reduziert, wobei das Pumpenelement 18 bis in seinen Stillstand verzögert werden kann. Dabei ist es vorgesehen, dass in der vierten Leitungsstrecke 102, insbesondere an dem zweiten Steueranschluss 124, kein Druckaufbau, insbesondere gegenüber dem Bremsmodus, erfolgt. Dadurch bleibt die Synchronisation aktiv, das heißt die Drehzahlen der Antriebswelle 48 und des Rotors 42 sind synchron zueinander, wobei das Abbremsen der Antriebswelle 48 durch den Rotor 42 unterbleibt.

In einer weiteren Ausführungsform weist die erste Leitungsstrecke 14 eine dritte Verbindungsstelle 152 auf, welche zwischen dem Pumpenelement 18 und der Entnahmestelle 96 angeordnet ist. Über die dritte Verbindungsstelle 152 ist die erste Leitungsstrecke 14 fluidisch mit einem von dem Fluid durchströmbaren, dritten Leitungselement 154 verbunden. Das dritte Leitungselement 154 ist einenends mit der dritten Verbindungsstelle 152 und andernends mit einem fünften Sumpfzugang 156 fluidisch verbunden, über welchen das dritte Leitungselement 154 fluidisch mit dem Hydrauliksumpf 80 verbunden ist. Zwischen der dritten Verbindungsstelle 152 und dem fünften Sumpfzugang 156 ist ein von dem Fluid durchströmbares, zweites Rückschlagventil 158 angeordnet. Das zweite Rückschlagventil 158 ist dazu ausgebildet, eine Strömung des Fluids aus dem Hydrauliksumpf 80 über den fünften Sumpfzugang 156 durch das zweite Rückschlagventil 158 hindurch zu der dritten Verbindungsstelle 152 zuzulassen und eine entgegengesetzte Strömung des Fluids von der dritten Verbindungsstelle 152 zu dem fünften Sumpfzugang 156 zu unterbinden.

Ein insbesondere als Abschaltung bezeichneter Betriebsmodus der Bremseinrichtung 10 kann beispielsweise auf den Bereitschaftsmodus oder auf den Bremsmodus nachfolgen. Dabei wird mittels des Pumpenelements 18 das Fluid über den fünften Sumpfzugang 156 aus dem Hydrauliksumpf 80 angesaugt und dadurch über das dritte Leitungselement 154 und die dritte Verbindungsstelle 152 in die erste Leitungsstrecke 14 eingeleitet. Das die erste Leitungsstrecke 14 durchströmende Fluid wird infolge des Ansaugens über den Pumpenausgang 24 in das Pumpenelement 18 eingeleitet und über den Pumpeneingang 103 aus dem Pumpenelement 18 abgeführt und in die vierte Leitungsstrecke 102 eingeleitet. Somit durchströmt das Fluid das Pumpenelement 18 in einer der ersten Strömungsrichtung 127 entgegengesetzten, zweiten Strömungsrichtung 160 des Pumpenelements 18. Das die vierte Leitungsstrecke 102 durchströmende Fluid wird mittels des Pumpenelements 18 über die zweite Verbindungsstelle 126 dem zweiten Steueranschluss 124 zugeführt. Dadurch wird der zweite Steueranschluss 124 von dem Fluid beziehungsweise dem Druck des Fluids beaufschlagt. Infolge der Beaufschlagung ist der Druck des Fluids an dem zweiten Steueranschluss 124 größer als an dem Steueranschluss 100. Somit liegt zwischen den Steueranschlüssen 100, 124 eine negative Druckdifferenz vor. Infolge der Beaufschlagung beziehungsweise der negativen Druckdifferenz wird die Ventileinrichtung 34 von der ersten Ventilstellung 30 in die zweite Ventilstellung 32 bewegt. Infolgedessen wird das geschlossene Kupplungselement 47 geöffnet, wodurch die Antriebswelle 48 und der Rotor 42 entkoppelt sind, sodass das Verzögern der Antriebswelle 48 durch den Rotor 42 unterbleibt. Durch das Öffnen des Kupplungselements 47 wird die Synchronisation deaktiviert, das heißt die Drehzahlen der Antriebswelle 48 und des Rotors 42 können unterschiedlich voneinander sein.

Ein insbesondere als Kühlmodus bezeichneter Betriebsmodus kann beispielsweise der Abschaltung nachfolgen. Bei dem Kühlmodus befindet sich die Ventileinrichtung in der zweiten Ventilstellung 32, das heißt, um in den Kühlmodus zu gelangen, wird mittels des Pumpenelements 18 der Druck in der vierten Leitungsstrecke 102, insbesondere an dem zweiten Steueranschluss 124, besonders erhöht, wodurch die Ventileinrichtung 34 in die zweite Ventilstellung 32 bewegt wird.

In dem Kühlmodus wird mittels des Pumpenelements 18 das Fluid über den fünften Sumpfzugang 156 aus dem Hydrauliksumpf 80 angesaugt und dadurch über das dritte Leitungselement 154 und die dritte Verbindungsstelle 152 in die erste Leitungsstrecke 14 eingeleitet. Das die erste Leitungsstrecke 14 durchströmende Fluid wird infolge des Ansaugens über den Pumpenausgang 24 in das Pumpenelement 18 eingeleitet und über den Pumpeneingang 103 aus dem Pumpenelement 18 abgeführt und in die vierte Leitungsstrecke 102 eingeleitet. Somit durchströmt das Fluid das Pumpenelement 18 in der zweiten Strömungsrichtung 160 des Pumpenelements 18. Das die vierte Leitungsstrecke 102 durchströmende Fluid wird mittels des Pumpenelements 18 über die zweite Verbindungsstelle 126 dem zweiten Ventileingang 104 zugeführt. Dadurch wird das Fluid anschließend durch den zweiten Durchgangskanal 108 hindurch über den zweiten Ventilausgang 88 in die dritte Leitungsstrecke 68 eingeleitet. Anschließend wird das die dritte Leitungsstrecke 68 durchströmende Fluid durch den Kühler 64 hindurchgeführt, wodurch das Fluid gekühlt werden kann, wobei das gekühlte Fluid danach über die Verzweigungsstelle 84 und den ersten Sumpfzugang 86 dem Hydrauliksumpf 80 zugeführt wird und dadurch in den Hydrauliksumpf 80 eingeleitet wird. Dies ist mittels Pfeilen 162 veranschaulicht. Somit kann das Fluid in dem Kühlmodus beispielsweise aus dem Getriebe entnommen werden und über den fünften Sumpfzugang 156 aus dem Hydrauliksumpf 80 dem Fluidpfad 12 zugeführt werden, mittels des Kühlers 64 gekühlt werden und anschließend über den ersten Sumpfzugang 86 und dem Hydrauliksumpf 80 in das Getriebe rückgeführt werden. Dadurch kann beispielweise das Getriebe besonders vorteilhaft gekühlt werden. Vorzugsweise liegt in dem Kühlmodus in der vierten Leitungsstrecke 102 und in der dritten Leitungsstrecke 68 der Niederdruck vor, insbesondere zwischen 3 bar und 5 bar. Vorzugsweise liegt in der ersten Leitungsstrecke 14 der Saugdruck vor.

In der in den Fig. gezeigten Ausführungsform weist der Retarder 38 einen separat von dem Retardereingang 44 ausgebildeten beziehungsweise beabstandeten zweiten Retardereingang 164 auf. Der zweite Retardereingang 164 ist fluidisch mit der zweiten Leitungsstrecke 16 verbunden, wodurch das die zweite Leitungsstrecke 16 durchströmende Fluid über beide Retardereingänge 44, 164 dem Retarder 38 zugeführt und somit in den Retarder 38 eingeleitet werden kann.

In weiterer Ausgestaltung ist in der vierten Leitungsstrecke 102 zwischen der der zweiten Verbindungsstelle 126 und dem zweiten Ventileingang 104 ein drittes Rückschlagventil 166 angeordnet. Das dritte Rückschlagventil 166 ist dazu ausgebildet, eine Strömung des Fluids von der zweiten Verbindungsstelle 126 durch das dritte Rückschlagventil 166 hindurch zu dem zweiten Ventileingang 104 zuzulassen und eine entgegengesetzte Strömung des Fluids von dem zweiten Ventileingang 104 zu der zweiten Verbindungsstelle 126 zu unterbinden. In der vierten Leitungsstrecke 102 ist zwischen dem dritten Rückschlagventil 166 und dem zweiten Ventileingang 104 ein insbesondere als Nebenstromfilter bezeichnetes Filterelement 168 angeordnet. Das Filterelement 168 ist von dem Fluid durchströmbar, wodurch das das Filterelement 168 durchströmende Fluid mittels des Filterelements 168 gefiltert und dadurch beispielweise gereinigt werden kann.

In einer weiteren Ausführungsform weist die Bremseinrichtung eine Abschalteinrichtung 174 auf. Die Abschalteinrichtung 174 ist dazu ausgebildet, den Druck des Fluids in der vierten Leitungsstrecke 102, insbesondere besonders schnell, besonders zu erhöhen, wodurch der zweite Steueranschluss 124, mit dem Druck des Fluids beaufschlagt werden kann, wodurch die Ventileinrichtung 34, insbesondere besonders schnell, von der ersten Ventilstellung 30 in die zweite Ventilstellung 32 bewegt wird.

In dem in dem Ausführungsbeispiel ist die Abschalteinrichtung 174 als hydraulische Abschalteinrichtung 176 ausgebildet. Dabei weist die hydraulische Abschalteinrichtung 176 ein elektrisches Schaltventil 177 mit einem von dem Fluid durchströmbaren Eingang 178 und einem von dem Fluid durchströmbaren Ausgang 180 auf, welcher fluidisch mit dem zweiten Steueranschluss 124 verbunden beziehungsweise verbindbar ist. Der Eingang 178 ist, insbesondere zwischen der Entnahmestelle 96 und dem Ventileingang 26, fluidisch mit der ersten Leitungsstrecke 14 verbunden. Das elektrische Schaltventil 177 ist zwischen wenigstens zwei Stellungen bewegbar, wobei in einer ersten der Stellungen der Eingang 178 und der Ausgang 180 fluidisch verbunden sind, wodurch das Fluid von dem Eingang 178 durch das elektrische Schaltventil 177 hindurch zu dem Ausgang 180 strömen kann, und in der zweiten Stellung ist der Eingang 178 nicht fluidisch mit dem Ausgang 180 verbunden, wodurch das Durchströmen des elektrischen Schaltventils mit dem Fluid unterbleibt. In den Fig. ist das Schaltventil 177 der hydraulischen Abschalteinrichtung 176 in der zweiten Stellung dargestellt.

Bei einem insbesondere als Schnellabschaltung bezeichneten Betriebsmodus, welcher beispielsweise auf den Bremsmodus folgen kann, wird das elektrische Schaltventil 177 der hydraulischen Abschalteinrichtung 176 von der zweiten Stellung in die erste Stellung bewegt. Dadurch kann das die erste Leitungsstrecke durchströmende Fluid durch das elektrische Schaltventil 177, insbesondere über den Eingang 178 und den Ausgang 180, hindurchgeführt werden, in die vierte Leitungsstrecke 102 eingeleitet werden und dem zweiten Steueranschluss 124 zugeführt werden, wodurch der Druck in der vierten Leitungsstrecke 102, insbesondere in dem zweiten Steueranschluss 124, besonders erhöht werden kann. Insbesondere dadurch, dass der Druck an dem zweiten Steueranschluss 124 dann größer ist als der Druck des Fluids an dem ersten Steueranschluss 100, kann die Ventileinrichtung 34 von der ersten Ventilstellung 30 in die zweite Ventilstellung 32 bewegt werden. Dadurch wird das Kupplungselement 47 geöffnet.

Die Abschalteinrichtung 174 weist vorzugweise wenigstens ein Federelement 200 auf, mittels welchem die Abschalteinrichtung 174 von der zweiten Stellung in die erste Stellung bewegt werden kann und/oder von der ersten Stellung in die zweite Stellung bewegt werden kann.

Die Bremseinrichtung weist vorzugsweise einen Wegsensor 204 auf, welcher dazu ausgebildet ist die jeweilige Ventilstellung 30, 32 und/oder die jeweilige Position 52, 54 und/oder die jeweilige Aktuatorposition 60, 62 zu erfassen.

### Bezugszeichenliste

- 10: Bremseinrichtung
- 12: Fluidpfad
- 14: erste Leitungsstrecke
- 16: zweite Leitungsstrecke
- 18: Pumpenelement
- 20: Elektromotor
- 24: Pumpenausgang
- 26: Ventileingang
- 27: Strömungsrichtung
- 28: Ventilausgang
- 30: erste Ventilstellung
- 32: zweite Ventilstellung
- 34: Ventileinrichtung
- 36: Durchgangskanal
- 38: Retarder
- 40: Stator
- 42: Rotor
- 44: Retardereingang
- 47: Kupplungselement
- 48: Antriebswelle
- 50: Koppeleinrichtung
- 52: erste Position
- 54: zweite Position
- 56: Ventilschieber
- 58: Aktuator
- 60: erste Aktuatorposition
- 62: zweite Aktuatorposition
- 64: Kühler
- 66: Wärme
- 68: dritte Leitungsstrecke
- 70: erster Streckenabschnitt
- 72: Kühlereingang
- 74: zweiter Streckenabschnitt
- 76: Kühlerausgang
- 80: Hydrauliksumpf
- 82: Retarderausgang
- 84: Verzweigungsstelle
- 86: erster Sumpfzugang
- 88: zweiter Ventilausgang
- 90: Wechselventil
- 92: Strömungsrichtung
- 96: Entnahmestelle
- 98: erstes Leitungselement
- 100: Steueranschluss
- 102: vierte Leitungsstrecke
- 103: Pumpeneingang
- 104: zweiter Ventileingang
- 108: zweiter Durchgangskanal
- 118: erste Verbindungsstelle
- 120: zweiter Sumpfzugang
- 122: erstes Rückschlagventil
- 124: zweiter Steueranschluss
- 126: zweite Verbindungsstelle
- 127: erste Strömungsrichtung
- 128: zweiter Retarderausgang
- 129: Pfeile
- 130: zweites Leitungselement
- 131: dritter Ventileingang
- 132: dritter Sumpfzugang
- 133: dritter Ventilausgang
- 134: dritter Durchgangskanal
- 138: dritter Retarderausgang
- 140: Drosselstelle
- 142: vierter Sumpfzugang
- 147: Pfeile
- 148: Temperatursensor
- 150: Drucksensor
- 152: dritte Verbindungsstelle
- 154: drittes Leitungselement
- 156: fünfter Sumpfzugang
- 158: zweites Rückschlagventil
- 160: zweite Strömungsrichtung
- 162: Pfeile
- 164: zweiter Retardereingang
- 166: drittes Rückschlagventil
- 168: Filterelement
- 174: Abschalteinrichtung
- 176: hydraulische Abschalteinrichtung
- 177: Schaltventil
- 178: Eingang
- 180: Ausgang
- 200: Federelement
- 204: Wegsensor

## Patentansprüche

1. Bremseinrichtung (10) für ein Kraftfahrzeug, mit einem von einem Fluid durchströmbaren und wenigstens zwei Leitungsstrecken (14, 16) aufweisenden Fluidpfad (12), in welchem wenigstens ein Pumpenelement (18) zum Hindurchfördern des Fluids durch den Fluidpfad (12), wenigstens ein von dem Fluid durchströmbarer Kühler (64) und wenigstens eine von dem Fluid durchströmbare, wenigstens einen Ventileingang (26) und einen Ventilausgang (28) aufweisende und zwischen wenigstens zwei Ventilstellungen (30, 32) bewegbare Ventileinrichtung (34) angeordnet ist, welche über den Ventileingang (26) mittels einer ersten Leitungsstrecke (14) der Leitungsstrecken (14, 16) fluidisch mit dem Pumpenelement (18) verbunden ist, mit einem mit dem Fluidpfad (12) fluidisch verbunden Hydrauliksumpf (80), mit einem Retarder (38), welcher einen Stator (40), einen separat von dem Stator (40) ausgebildeten Rotor (42), einen Retardereingang (44), über welchen der Retarder (38) mittels einer zweiten Leitungsstrecke (16) der Leitungsstrecken (14, 16) fluidisch über den Ventilausgang (28) mit der Ventileinrichtung (34) verbunden ist, und wenigstens einen Retarderausgang (82) aufweist, über welchen das Fluid aus dem Retarder (38) abführbar und in den Fluidpfad (12) einleitbar ist, wobei in einer ersten der Ventilstellungen (30) der Ventileingang (26) mit dem Ventilausgang (28) fluidisch verbunden ist, wodurch das die erste Leitungsstrecke (14) durchströmende Fluid durch die Ventileinrichtung (34) hindurch, über die zweite Leitungsstrecke (16) dem Retardereingang (44) zuführbar ist, und in der zweiten Ventilstellung (32) der Ventileingang (26) nicht fluidisch mit dem Ventilausgang (28) verbunden ist
, wobei der Fluidpfad (12) eine separat von der ersten und der zweiten Leitungsstrecke (14, 16) ausgebildete, dritte Leitungsstrecke (68), über welche der Retarderausgang (82) und der Kühler (64) unter Umgehung der Ventileinrichtung (34) fluidisch verbunden sind,
aufweist,
**dadurch gekennzeichnet, dass** der Fluidpfad (12) eine in der dritten Leitungsstrecke (68) angeordnete Verzweigungsstelle (84) aufweist, über welche der Kühler (64) unter Umgehung des Retarders (38), unter Umgehung der Ventileinrichtung (34) und unter Umgehung des Pumpenelements (18) fluidisch mit dem Hydrauliksumpf (80) verbunden ist, wobei der Kühler (64) über die Ventileinrichtung (34) unter Umgehung des Retarders (38) fluidisch mit der ersten Leitungsstrecke (14) verbunden oder verbindbar ist.

2. Bremseinrichtung (10) nach Anspruch 1
**gekennzeichnet durch**
wenigstens ein Kupplungselement (47), über welches der Rotor (42) mit einer Antriebswelle (48) des Kraftfahrzeugs koppelbar und von der Antriebswelle (48) entkoppelbar ist, und eine Koppeleinrichtung (50), mittels welcher der Rotor (42) und die Antriebswelle (48) durch das Bewegen der Ventileinrichtung (34) in die erste Ventilstellung (30) über das Kupplungselement (47) koppelbar sind und durch das Bewegen der Ventileinrichtung (34) in die zweite Ventilstellung (34) entkoppelbar sind.

3. Bremseinrichtung (10) nach Anspruch 2
**dadurch gekennzeichnet, dass**
die Ventileinrichtung (34) einen zwischen wenigstens zwei Positionen (52, 54) bewegbaren Ventilschieber (56) aufweist, welcher in der ersten Ventilstellung (30) in einer ersten der Positionen (52) angeordnet ist und in der zweiten Ventilstellung (32) in der zweiten der Positionen (54) angeordnet ist, und die Koppeleinrichtung (50) als mechanisch mit dem Ventilschieber (56) gekoppelter Aktuator (58) ausgebildet ist, welcher zwischen wenigstens zwei Aktuatorpositionen (60, 62) bewegbar ist, wobei der Aktuator (58) durch Bewegen des Ventilschiebers (56) in die erste Position (52) in eine erste der Aktuatorpositionen (60) bewegbar ist, wodurch der Rotor (42) und die Antriebswelle (48) über das Kupplungselement (47) gekoppelt sind, und durch das Bewegen des Ventilschiebers (56) in die zweite Position (54) in die zweite Aktuatorposition (62) bewegbar ist, wodurch der Rotor (42) und die Antriebswelle (48) entkoppelt sind.

4. Bremseinrichtung (10) nach einem der vorhergehenden Ansprüche,
**dadurch gekennzeichnet, dass**
die erste Leitungsstrecke (14) eine Entnahmestelle (96) aufweist, über welche das Pumpenelement (18) fluidisch mit einem Steueranschluss (100) der Ventileinrichtung (34) verbunden ist, wodurch der Steueranschluss (100) mittels des Pumpenelements (18) von dem Fluid beaufschlagbar ist, wodurch die Ventileinrichtung (34) von der zweiten Ventilstellung (32) in die erste Ventilstellung (30) bewegbar ist.

5. Bremseinrichtung (10) nach einem der vorhergehenden Ansprüche,
**dadurch gekennzeichnet, dass**
der Fluidpfad (12) eine separat von den Leitungsstrecken (14, 16, 68) ausgebildete und von dem Fluid durchströmbare, vierte Leitungsstrecke (102) umfasst, über welche das Pumpenelement (18) und die Ventileinrichtung (34) unter Umgehung der ersten Leitungsstrecke (14), des Retarders (38), des Ventileingangs (26), des Ventilausgangs (28) und des Kühlers (64) fluidisch verbunden sind.

6. Bremseinrichtung (10) nach Anspruch 5,
**dadurch gekennzeichnet, dass**
die Ventileinrichtung (34) wenigstens einen von dem Ventileingang (26) beabstandeten und fluidisch mit der vierten Leitungsstrecke (102) verbundenen, zweiten Ventileingang (104) und wenigstens einen von dem Ventilausgang (28) beabstandeten und fluidisch mit dem Hydrauliksumpf (80) verbundenen, zweiten Ventilausgang (88) aufweist, wobei in der zweiten Ventilstellung (32) das die vierte Leitungsstrecke (102) durchströmende Fluid über den zweiten Ventileingang (104), durch die Ventileinrichtung (34) hindurch und über den zweiten Ventilausgang (88) in den Hydrauliksumpf (80) einleitbar ist.

7. Bremseinrichtung (10) nach Anspruch 6,
**dadurch gekennzeichnet, dass**
der zweite Ventilausgang (88) unter Umgehung des Retarders (38) und des Pumpenelements (18) fluidisch mit dem Kühler (64) verbunden ist.

8. Bremseinrichtung (10) nach einem der Ansprüche 5 bis 7,
**dadurch gekennzeichnet, dass**
die Ventileinrichtung (34) wenigstens einen von dem Steueranschluss (100) beabstandeten und fluidisch mit der vierten Leitungsstrecke (102) verbundenen, zweiten Steueranschluss (124) aufweist, welcher mittels des Pumpenelements (18) über die vierte Leitungsstrecke (102) von dem Fluid beaufschlagbar ist, wodurch die Ventileinrichtung (34) von der ersten Ventilstellung (30) in die zweite Ventilstellung (32) bewegbar ist.

9. Bremseinrichtung (10) nach einem der vorhergehenden Ansprüche,
**gekennzeichnet durch**
einen von dem Retarderausgang (82) beanstandeten, zweiten Retarderausgang (128), einen fluidisch mit dem zweiten Retarderausgang (128) verbundenen und von dem Ventileingang (26) beabstandeten, dritten Ventileingang (131) der Ventileinrichtung (34) und einen von dem Ventilausgang (28) beabstandeten und mit dem Hydrauliksumpf (80) fluidisch verbundenen, dritten Ventilausgang (133) der Ventileinrichtung (34), wobei in der zweiten Ventilstellung (32) der dritte Ventileingang (131) und der dritte Ventilausgang (133) fluidisch verbunden sind, wodurch das über den zweiten Retarderausgang (128) aus dem Retarder (38) abgeführte Fluid über den dritten Ventileingang (131), durch die Ventileinrichtung (34) hindurch, über den dritten Ventilausgang (133) in den Hydrauliksumpf (80) einleitbar ist, und in der ersten Ventilstellung (30) der dritte Ventileingang (131) nicht mit dem dritten Ventilausgang (133) fluidisch verbunden ist.

## Claims

1. A braking device (10) for a motor vehicle, comprising a fluid path (12) through which a fluid can flow and which has at least two conduit sections (14, 16), and in which at least one pump element (18) for conveying the fluid through the fluid path (12), at least one cooler (64) through which the fluid can flow, and at least one valve device (34) fluidly connected to the pump element (18) via the valve inlet (26) by means of a first conduit section (14) of the conduit sections (14, 16) and through which the fluid can flow and which has at least one valve inlet (26) and one valve outlet (28) and which can be moved between at least two valve positions (30, 32) is disposed, comprising a hydraulic sump (80) fluidly connected to the fluid path (12), and comprising a retarder (38) having a stator (40), a rotor (42) formed separately from the stator (40), a retarder inlet (44), via which the retarder (38) is fluidly connected to the valve device (34) by means of a second conduit section (16) of the conduit sections (14, 16) via the valve outlet (28), and having at least one retarder outlet (82) via which the fluid can be removed from the retarder (38) and introduced into the fluid path, wherein, in a first one of the valve positions (30), the valve inlet (26) is fluidly connected to the valve outlet (28), whereby the fluid flowing through the first conduit section (14) can be delivered to the retarder inlet (44) through the valve device (34) via the second conduit section (16), and, in the second valve position (32), the valve inlet (26) is not fluidly connected to the valve outlet (28), wherein the fluid path (12) has a third conduit section (68) formed separately from the first and the second conduit sections (14, 16), via which the retarder outlet (82) and the cooler (64) are fluidly connected while bypassing the valve device (34),
**characterised in that** the fluid path (12) has a branching point (84) disposed in the third conduit section (68), via which the cooler is fluidly connected to the hydraulic sump (80) while bypassing the retarder (38), bypassing the valve device (34) and bypassing the pump element (18), wherein the cooler (64) is fluidly connected or connectable to the first conduit section (14) via the valve device (34) while bypassing the retarder (38).

2. The braking device (10) according to claim 1,
**characterised by**
at least one clutch element (47), via which the rotor (42) can be coupled with a drive shaft (48) of the motor vehicle and can be decoupled from the drive shaft (48), and a coupling device (50), by means of which the rotor (42) and the drive shaft (48) can be coupled via the clutch element (47) by moving the valve device (34) into the first valve positon (30), and can be decoupled by moving the valve device (34) into the second valve position (34).

3. The braking device (10) according to claim 2,
**characterised in that**
the valve device (34) has a valve spool (56) which can be moved between at least two positions (52, 54) and which, in the first valve position (30), is disposed in a first of the positions (52) and which, in the second valve position (32), is disposed in the second of the positions (54), and the coupling device (50) is formed as an actuator (58) mechanically coupled with the valve spool (56) and which can be moved between at least two actuator positions (60, 62), wherein the actuator (58) can be moved into a first one of the actuator positions (60) by moving the valve spool (56) into the first position (52), whereby the rotor (42) and the drive shaft (48) are coupled via the clutch element (47), and which can be moved into the second actuator position (62) by moving the valve spool (56) into the second position (54), whereby the rotor (42) and the drive shaft (48) are decoupled.

4. The braking device (10) according to one of the preceding claims,
**characterised in that**
the first conduit section (14) has a draw-off point (96), via which the pump element (18) is fluidly connected to a control port of the valve device (34), whereby the control port (100) can be supplied with the fluid by means of the pump element (18), whereby the valve device (34) can be moved from the second valve position (32) to the first valve position (30).

5. The braking device (10) according to one of the preceding claims,
**characterised in that**
the fluid path (12) includes a fourth conduit section (102) formed separately from the conduit sections (14, 16, 68) and through which the fluid can flow, and via which the pump element (18) and the valve device (34) are fluidly connected while bypassing the first conduit section (14), the retarder (38), the valve inlet (26), the valve outlet (28), and the cooler (64).

6. The braking device (10) according to claim 5,
**characterised in that**
the valve device (34) has at least one second valve inlet (104) spaced apart from the valve inlet (26) and fluidly connected to the fourth conduit section (102), and at least one second valve outlet (88) spaced apart from the valve outlet (28) and fluidly connected to the hydraulic sump (80), wherein, in the second valve position (32), the fluid flowing through the fourth conduit section (102) can be introduced into the hydraulic sump (80) through the valve device (34) via the second valve outlet (88) and via the second valve outlet (106).

7. The braking device (10) according to claim 6,
**characterised in that**
the second valve outlet (88) is fluidly connected to the cooler (64) while bypassing the retarder (38) and the pump element (18).

8. The braking device (10) according to one of claims 5 to 7,
**characterised in that**
the valve device (34) has at least one second control port (124) spaced apart from the control port (100) and fluidly connected to the fourth conduit section (102), and which can be supplied with the fluid by means of the pump element (18) via the fourth conduit section (102), whereby the valve device (34) can be moved from the first valve position (30) to the second valve position (32).

9. The braking device (10) according to one of the preceding claims,
**characterised by**
a second retarder outlet (128) spaced apart from the retarder outlet (82), a third valve inlet (131) of the valve device (34) fluidly connected to the second retarder outlet (128) and spaced apart from the valve inlet (26), and a third valve outlet (133) of the valve device (34) spaced apart from the valve outlet (28) and fluidly connected to the hydraulic sump (80), wherein, in the second valve position (32), the third valve inlet (131) and the third valve outlet (133) are fluidly connected, whereby the fluid removed from the retarder (38) via the second retarder outlet (128) can be introduced into the hydraulic sump (80) through the valve device (34) via the third valve outlet (133), and, in the first valve position (30), the third valve inlet (131) is not fluidly connected to the third valve outlet (133).

## Revendications

1. Dispositif de frein (10) pour un véhicule automobile, comprenant un chemin de liquide alimenté par un liquide et présentant au moins deux sections de conduite (14, 16), dans lequel au moins un élément de pompe (18) servant à transporter le liquide à travers le chemin de liquide (12), au moins un refroidisseur (64) pouvant être traversé par le liquide et au moins un dispositif de soupape (34) mobile entre au moins deux positions de soupape (30, 32) et présentant au moins une entrée de soupape (26) et une sortie de soupape (28) lequel est disposé via l'entrée de soupape (26) au moyen d'une première section de conduite (14) des sections de conduite (14, 16) est relié fluidiquement à l'élément de pompe (18), comprenant un réservoir hydraulique (80) relié fluidiquement au chemin de liquide (12), un ralentisseur (38) qui comprend un stator (40), un rotor (42) réalisé séparément du stator (40), une entrée de ralentisseur (44), par lequel le ralentisseur (38) est relié fluidiquement au dispositif de soupape (34) au moyen d'une deuxième section de conduite (16) des sections de conduite (14, 16) via la sortie de soupape (28), et au moins une sortie de ralentisseur (82) par laquelle le liquide peut être évacué du ralentisseur (38) et introduit dans le chemin de liquide (12), dans lequel, dans une première position parmi les positions de soupape (30), l'entrée de soupape (26) est reliée fluidiquement à la sortie de soupape (28), le liquide s'écoulant à travers la première section de conduite (14) passe ainsi à travers le dispositif de soupape (34), et peut être amené à l'entrée (44) du ralentisseur par l'intermédiaire de la deuxième section de conduite (16), et dans la deuxième position de soupape (32), l'entrée (26) de la soupape n'est pas reliée fluidiquement à la sortie de soupape (28),
dans lequel le chemin de liquide (12) comprend une troisième section de conduite (68) conçue séparément de la première et de la section de conduite (14, 16), par laquelle la sortie de ralentisseur (82) et le refroidisseur (64) sont reliés fluidiquement en contournant le dispositif de soupape (34),
**caractérisé en ce que** le chemin de liquide (12) présente un point de bifurcation (84) placé dans la troisième section de conduite (68), là où le refroidisseur (64) est relié fluidiquement au réservoir hydraulique (80) en contournant le ralentisseur (38), en contournant le dispositif de soupape (34) et en contournant l'élément de pompe (18), le refroidisseur (64) étant relié ou pouvant être relié fluidiquement à la première section de conduite (14) par le dispositif de soupape (34) en contournant le ralentisseur (38).

2. Dispositif de de frein selon la revendication 1,
**caractérisé par**
au moins un élément d'accouplement (47), par lequel le rotor (42) peut être accouplé à un arbre d'entraînement (48) du véhicule automobile et peut être désaccouplé de l'arbre d'entraînement (48), et un dispositif d'accouplement (50), au moyen duquel le rotor (42) et l'arbre d'entraînement (48) peuvent être accouplés par le déplacement du dispositif de soupape (34) dans la première position de soupape (30) au moyen de l'élément d'accouplement (47) et peuvent être désaccouplés par le déplacement du dispositif de soupape (34) dans la deuxième position de soupape (34).

3. Dispositif de de frein selon la revendication 2,
**caractérisé en ce que**
le dispositif de soupape (34) présente un tiroir de soupape (56) mobile entre au moins deux positions (52, 54), lequel est disposé dans l'une première des positions (52), dans la première position de soupape (30) et est disposé dans l'une des deuxièmes positions (54), dans la deuxième position de soupape (32), et le dispositif d'accouplement (50) est conçu comme un actionneur (58) accouplé mécaniquement au tiroir de soupape (56), qui est mobile entre au moins deux positions d'actionneur (60, 62), l'actionneur (58) pouvant être déplacé dans une première des positions d'actionneur (60) par déplacement du tiroir de soupape (56) dans la première position (52), le rotor (42) et l'arbre d'entraînement (48) étant ainsi accouplés par l'intermédiaire de l'élément d'accouplement (47), et peut être déplacé par déplacement du tiroir de soupape (56) dans la deuxième position (54) à la deuxième position d'actionneur (62), ce qui permet de désaccoupler le rotor (42) et l'arbre d'entraînement (48).

4. Dispositif de de frein selon l'une quelconque des revendications précédentes,
**caractérisé en ce que**
la première section de conduite (14) présente un point de prélèvement (96), où l'élément de pompe (18) est relié fluidiquement à un raccord de commande (100) du dispositif de soupape (34), ce qui permet au raccord de commande (100) d'être alimenté en liquide au moyen de l'élément de pompe (18), ce qui permet au dispositif de soupape (34) de se déplacer de la deuxième position de soupape (32) à la première position de soupape (30).

5. Dispositif de de frein selon l'une quelconque des revendications précédentes,
**caractérisé en ce que**
le chemin de liquide (12) comprend une quatrième section de conduite (102) formée séparément des sections de conduite (14, 16, 68) et pouvant être traversée par le liquide par laquelle l'élément de pompe (18) et le dispositif de soupape (34) sont reliés fluidiquement en contournant la première section de conduite (14), le ralentisseur (38), l'entrée de soupape (26), la sortie de soupape (28) et le refroidisseur (64).,

6. Dispositif de de frein selon la revendication 5,
**caractérisé en ce que**
le dispositif de soupape (34) comprend au moins une deuxième entrée de soupape (104) reliée fluidiquement à la quatrième section de conduite (102) et à l'écart de l'entrée de soupape (26), et au moins une deuxième sortie de soupape (88) reliée fluidiquement au réservoir hydraulique (80) et à l'écart de la sortie de soupape (28). dans lequel dans la deuxième position de soupape (32), le liquide s'écoulant à travers la quatrième section de conduite (102) pouvant être introduit dans le réservoir hydraulique (80) via la deuxième entrée de soupape (104), à travers le dispositif de soupape (34) et via la deuxième sortie de soupape (88).

7. Dispositif de de frein selon la revendication 6,
**caractérisé en ce que**
la deuxième sortie de soupape (88) est reliée fluidiquement au refroidisseur (64) en contournant le ralentisseur (38) et l'élément de pompe (18).

8. Dispositif de de frein selon l'une quelconque des revendications 5 à 7,
**caractérisé en ce que**
le dispositif de soupape (34) présente au moins un deuxième raccord de commande (124) à l'écart du raccord de commande (100) et relié fluidiquement à la quatrième section de conduite (102), qui peut être alimenté en liquide au moyen de l'élément de pompage (18) par l'intermédiaire de la quatrième section de conduite (102), ce qui permet au dispositif de soupape (34) d'être déplacé de la première position de soupape (30) à la deuxième position de soupape (32).

9. Dispositif de de frein selon l'une quelconque des revendications précédentes,
**caractérisé en ce que** par
une deuxième sortie de ralentisseur (128) à l'écart de la sortie de ralentisseur (82), une troisième entrée de soupape (131) du dispositif de soupape (34) reliée fluidiquement à la deuxième sortie de ralentisseur (128) et à l'écart de l'entrée de soupape (26), et une troisième sortie de soupape (133) du dispositif de soupape (34) à l'écart de la sortie de soupape (28) et reliée fluidiquement au réservoir hydraulique (80), dans la deuxième position de soupape (32), la troisième entrée de soupape (131) et la troisième sortie de soupape (133) étant reliées fluidiquement,
ce qui permet au liquide évacué du ralentisseur (38) par la deuxième sortie de ralentisseur (128) d'être introduit dans le réservoir hydraulique (80) par la troisième entrée de soupape (131), à travers le dispositif de soupape (34),
par la troisième sortie de soupape (133) dans le réservoir hydraulique (80), et dans la la première position de soupape (30), la troisième entrée de soupape (131) n'est pas reliée fluidiquement à la troisième sortie de soupape (133).
